# EUROPEAN PATENT SPECIFICATION

(11) **EP 4 640 414 B1**
(45) Date of publication and mention of the grant of the patent: **19.08.2026**
(21) Application number: 25171480.4
(22) Date of filing: 18.04.2025
(51) Int. Cl.: B29C 70/52, B29B 17/00, B29D 99/00, B29B 17/04, B29K 101/12, B29K 105/12

(54) **PROCESS OF MANUFACTURING AN ELONGATED HOLLOW BODY MADE OF COMPOSITE MATERIAL AND POLE OBTAINED BY SUCH A PROCESS**
VERFAHREN ZUR HERSTELLUNG EINES LÄNGLICHEN HOHLKÖRPERS AUS VERBUNDMATERIAL UND NACH DIESEM VERFAHREN HERGESTELLTER PFOSTEN
PROCÉDÉ DE FABRICATION D'UN CORPS CREUX ALLONGÉ EN MATÉRIAU COMPOSITE ET POTEAU OBTENU PAR UN TEL PROCÉDÉ

(30) Priority: 23.04.2024 IT 202400009238
(43) Date of publication of application: 29.10.2025
(73) Proprietor: Top Glass Industries S.p.A., 25128 Brescia BS (IT)
(72) Inventor: BRANCA, Alfonso, 20145 MILANO (IT)
(74) Representative: PGA S.p.A.

(56) References cited:
- EP-B1- 0 814 950
- DE-A1- 102013 219 960
- US-A- 4 570 988

## Description

### FIELD OF THE INVENTION

The present invention relates to a process of manufacturing an elongated hollow body, for example a pole, from composite material in which recycled composite material is also used. The invention also relates to a pole made of composite material and also including recycled composite material; the pole may preferably be made by the process described in detail herein using a rotary mold or by molding processes using a fixed mold or by filament winding techniques.

### STATE OF THE ART

As is well known, there is an increasing need for the reduction of environmental impact and the convenient reuse of materials from discarded object recovery operations.

In particular, plastics and composite materials using such plastics, given their composition and market reach, have a not insignificant environmental impact.

In fact, products made of composite materials have a polymeric matrix (resulting from the solidification of thermoplastic or heat-curing resins) wherein a mechanically resistant structure is embedded, consisting of fibers of material with good mechanical properties.

When recycling manufactured products made of composite materials, thermoplastic-based binder materials present fewer recovery problems than thermoset-based materials; in contrast, for composite materials with thermoset resins, it is not possible to easily recover the resin.

To overcome these drawbacks, the recycling of thermoset-based composite products is, for example, typically made possible by prior destruction or mechanical crushing of the product itself, so as to obtain heterogeneous material consisting of broken fibers, portions of fibers nested in polymeric matrix granules, and polymeric matrix granules. To recycle the resulting material, the latter can be used as a filler in applications where no special mechanical properties are required. US4570988A discloses fiber-resin composite pultrusion methods and products and a method for pultruding rods of alternately hollow and solid cross section.

In this situation, the technical task posed behind the present invention is to devise a process for specifically producing elongated hollow bodies, such as poles, using recycled composite material so that the resulting product is not adversely affected by the presence of the recycled material.

An additional purpose is to provide a process that can ensure effective stability of the coupling between the binding resin, the new fibers used, and the recycled material.

An additional important purpose of the present invention is to identify a process for producing hollow bodies such as poles that ensures optimal recycled material utilization.

Furthermore, another purpose of the process according to the present invention is to devise a methodology that ensures the use of the recycled material in such a way that the presence of the recycled material can be exploited advantageously for the mechanical behavior of the elongated hollow body or pole thus obtained.

In addition, an aim of the present invention is to devise a production process that allows the extensive use of material from recycling operations, with consequent benefits on reducing environmental impact and with convenient reuse of poorly biodegradable material.

Another important purpose of the invention is to devise a process and related product (such as a pole) that does not increase production costs or manufacturing complexity compared to state-of-the-art processes.

### SUMMARY

The technical task and the purposes listed above are substantially achieved by a process and pole according to one or more of the appended claims. The invention is defined by the process of claim 1 and the product of claim 12.

Aspects of the invention are described below.

A 1st aspect concerns a manufacturing process of an elongated hollow body made of composite material, said process comprising the following steps:
- arranging new reinforcement fibers and a laminar body internally to a longitudinal cavity of an elongated mold, so that the laminar body is placed internally to the longitudinal cavity of the elongated mold adjacent to the new reinforcement fibers; where the laminar body is made of at least partially recycled material;
- introducing liquid polymerizable resin into said elongated mold;
- placing the elongated mold in rotation around a longitudinal axis of predominant development of the elongated mold itself to bring about centrifugal movement of liquid polymerizable resin and impregnating with said liquid polymerizable resin said new reinforcement fibers and said laminar body;
- solidifying said liquid polymerizable resin by forming an elongated hollow body in the solid state;
- extracting said elongated hollow body in solid state from the elongated mold.

In a 2nd aspect in accordance with the previous aspect the elongated hollow body is a tapered pole.

In a 3rd aspect according to any one of the preceding aspects, arranging the new reinforcement fibers and a laminar body internally to the longitudinal cavity involves the laminar body being placed internally to the longitudinal cavity of the elongated mold adjacent to the new reinforcement fibers, which are arranged radially inside and/or radially outside of the laminar body.

In a 4th aspect according to any one of the preceding aspects the laminar body made of at least partially recycled material includes:
o a containment layer and
o **recycled** material obtained by crushing composite material, such recycled material including recycled fibers and recycled polymer particles, said recycled material being arranged on one side of the containment layer.

In a 5th aspect according to any one of the preceding aspects, prior to the step of arranging said new reinforcement fibers and said laminar body internally to the longitudinal cavity of the elongated mold the following, further steps are carried out externally to the longitudinal cavity of the elongated mold:
- preparing one or more layers in said new reinforcement fibers, optionally wherein each of said layers has respective width and respective length different from those of the other layers;
- superimposing said one or more layers and said laminar body to form a multilayer;
- wrapping said multilayer on a winder, optionally on a tubular winder.

In a 6th aspect according to the preceding aspect the step of arranging said new reinforcement fibers and said laminar body internally to the longitudinal cavity of the elongated mold includes:
- introducing into said elongated mold the winder bearing said multilayer coiled on the winder, said introduction occurring through at least one end opening of the elongated mold;
- sliding the winder off the multilayer and pulling the winder out of the elongated mold;
- during or after the step of sliding off the winder, placing the mold in rotation so that the multilayer can be unwound and progressively deposited at an inner surface of the elongated mold.

In a 7th aspect according to any one of the preceding aspects during said polymerizable resin introduction step, the elongated mold is placed in rotation around the longitudinal axis of predominant development at a predetermined angular speed.

In an 8th aspect according to any one of the preceding aspects introducing liquid polymerizable resin into said elongated mold includes feeding the liquid polymerizable resin to one or more injection nozzles at a pressure higher than atmospheric pressure, said one or more nozzles operating internally to the longitudinal cavity.

In a 9th aspect according to any one of the preceding aspects said liquid polymerizable resin is of the illumination cross-linkable type, and wherein it is planned to illuminate the longitudinal cavity inside the elongated mold to promote said solidification by cross-linking said liquid polymerizable resin.

In a 10th aspect according to any one of the preceding aspects following the step of arranging said new reinforcement fibers and said laminar body internally to the longitudinal cavity of the elongated mold, the new reinforcement fibers and the laminar body are positioned so that, proceeding radially from the longitudinal axis of predominant development to a/said inner surface of the elongated mold, one intercepts first one or more layers of reinforcement fibers only, then one or more layers formed by the laminar body C possibly interspersed with one or more layers of reinforcement fibers F, and then one or more layers formed by the laminar body only. In an 11th aspect according to any one of the preceding aspects from the 1st to the 9th following the step of arranging said new reinforcement fibers and said laminar body internally to the longitudinal cavity of the elongated mold, the new reinforcement fibers and the laminar body are positioned so that, proceeding radially from the longitudinal axis of predominant development to a/said inner surface of the elongated mold, one intercepts first one or more layers formed only by the laminar body, then one or more layers formed by the laminar body possibly interspersed with one or more layers of new reinforcement fibers, and then one or more layers of only new reinforcement fibers.

In a 12th aspect according to any one of the preceding aspects from 1st to 9th said new reinforcement fibers comprise first new reinforcement fibers and second new reinforcement fibers; and wherein, following the step of arranging said new reinforcement fibers and said laminar body internally to the longitudinal cavity of the elongated mold, the laminar body is placed internally to the longitudinal cavity of the elongated mold in interposition between at least a portion of the first new reinforcement fibers, arranged radially inward with respect to the laminar body, and at least a portion of the second new reinforcement fibers, arranged radially outward with respect to the laminar body.

In a 13th aspect according to the preceding aspect following the step of arranging said new reinforcement fibers and said laminar body internally to the longitudinal cavity of the elongated mold, proceeding radially from the longitudinal axis of predominant development to a/said inner surface of the elongated mold, one first intercepts one or more layers of only first new reinforcement fibers, then one or more layers formed by the laminar body possibly interspersed with one or more layers of first new reinforcement fibers, then one or more layers of second new reinforcement fibers possibly interspersed with one or more layers formed by the laminar body, and finally exclusively one or more layers of only second new reinforcement fibers.

In a 14th aspect according to the preceding aspect, prior to the step of arranging said new reinforcement fibers and said laminar body internally to the longitudinal cavity of the elongated mold, said/the following further steps carried out externally to the longitudinal cavity of the elongated mold include:
- preparing one or more first layers in said first new reinforcement fibers, optionally wherein each of said first layers has respective width and respective length different from those of the other first layers,
- preparing one or more second layers in said new second fibers, optionally wherein each of said second layers has respective width and respective length different from those of the other second layers,
- superimposing on said one or more first layers, said laminar body, and said one or more second layers to form a multilayer in which, proceeding along a thickness of the multilayer, the laminar body is interposed between the one or more first layers of first new reinforcement fibers and the one or more second layers of second new reinforcement fibers,
- wrapping said multilayer on a winder, optionally on a tubular winder.

In a 15th aspect according to the preceding aspect, the step of preparing the one or more first layers involves at least partially overlapping a plurality of first layers arranged in plan.

In a 16th aspect according to the 14th or 15th aspect, the step of preparing the one or more second layers involves at least partially overlapping a plurality of second layers arranged in plan.

In a 17th aspect according to the 14th or 15th or 16th aspect before said winding step the one or more first layers, the one or more second layers and the laminar body are arranged in plane and at least partially overlapping each other.

In an 18th aspect according to any one of the preceding aspects from the 5th to 17^{th}, following the step of introducing the liquid polymerizable resin into the elongated mold and putting the elongated mold into rotation, the movement of the liquid polymerizable resin in the centrifugal direction takes place, so that the resin impregnates the multilayer.

In a 19th aspect according to the preceding aspect, the liquid resin engages the multilayer as follows:
- liquid polymerizable resin successively passes through and impregnates at least a portion of new reinforcement fibers, then a portion of the laminar body and possibly any additional new reinforcement fibers, then an additional portion of the laminar body.

In a 20th aspect according to the 18th aspect the liquid resin engages the multilayer as follows:
- liquid polymerizable resin successively passes through and impregnates at least one part of the laminar body, then an additional part of the laminar body and possibly a first part of new reinforcement fibers and then the remaining part of new reinforcement fibers.

In a 21st aspect according to the 18th aspect the liquid resin engages the multilayer as follows:
- liquid polymerizable resin successively passes through and impregnates at least a portion of first new reinforcement fibers, then a portion of the laminar body and possibly any additional first new reinforcement fibers, then an additional portion of the laminar body and possibly a first portion of second new reinforcement fibers and then a remaining portion of second new reinforcement fibers.

In a 22nd aspect according to any one of the preceding aspects, the elongated hollow body extracted from the elongated mold has tubular conformation with annular cross section.

In a 23rd aspect according to the preceding aspect, said elongated body has along a part of its longitudinal development, optionally along its entire longitudinal development, cross section including:
- a first annular zone, in which the first new reinforcement fibers are arranged embedded in polymeric matrix formed by solidification of said liquid polymerizable resin,
- a second annular zone, radially external to the first annular zone, in which the second new reinforcement fibers are arranged embedded in polymeric matrix formed by solidification of said liquid polymerizable resin, and
- a third annular zone interposed between the first and second annular zones and comprising said laminar body in which is present polymeric matrix also formed by the solidification of said liquid polymerizable resin.

In a 24th aspect according to the preceding aspect, the third annular zone also includes a boundary zone with the first annular zone in which both parts of the laminar body and first new reinforcement fibers are present and a boundary zone with the second annular zone in which both parts of the laminar body and second new reinforcement fibers are present.

In a 25th aspect according to the 23rd or 24th aspect, following said solidification step of the liquid polymerizable resin, the polymer resin matrix present inside the laminar body is interconnected with the polymer resin matrix of the first annular zone and the polymer resin matrix of the second annular zone.

In a 26th aspect according to the 23rd or 24th or 25th aspect:
- the first annular zone, devoid of second new reinforcement fibers, has an area measuring between 10 and 30 percent of the total cross-sectional area of the elongated body,
- the second annular zone, lacking new first fibers, has an area measuring between 15 and 35 percent of the total cross-sectional area of the elongated body,
- the third annular zone, which lacks new reinforcement fibers, has an area measuring between 20 and 50 percent of the total cross-sectional area of the elongated body.

In a 27th aspect according to the 23rd or 24th or 25th or 26th aspect the first annular zone has circular crown conformation, the second annular zone has circular crown conformation and is concentric to the first annular zone, the third annular zone has circular crown conformation and is concentric to the first annular zone and the second annular zone.

In a 28th aspect according to the 23rd or 24th or 25th or 26th or 27th aspect, the first annular zone has less area than the second annular zone which, in turn, has less area than the third annular zone.

In a 29th aspect according to any one of the preceding aspects from 1st to 22nd said elongated body has along a part of its longitudinal development, optionally along its entire longitudinal development, transverse section including:
- a first annular zone, in which new reinforcement fibers embedded in polymeric matrix formed by solidification and polymerization of liquid polymerizable resin are arranged,
- a second annular zone, radially external to the first annular zone comprising said laminar body in which there is polymeric matrix also formed by solidification and polymerization of liquid polymerizable resin.

In a 30th aspect according to the preceding aspect, the second annular zone also includes a boundary zone with the first annular zone in which both part of the laminar body and first new reinforcement fibers are present. In a 31st aspect according to the 29th or 30th aspect, following the solidification of the liquid polymerizable resin, the polymeric matrix present in the second zone inside the laminar body is interconnected with the polymeric matrix of the first annular zone.

In a 32nd aspect according to the 29th or 30th or 31st aspect, the first annular zone has an area measuring between 20 and 70 percent compared to the total cross-sectional area of the elongated body, while the second annular zone has an area measuring between 30 and 80 percent compared to the total cross-sectional area of the elongated body.

In a 33rd aspect according to the 29th or 30th or 31st or 32nd aspect the first annular zone has area less than the second zone.

In a 34th aspect according to the 29th or 30th or 31st or 32nd or 33rd aspect the first annular zone has circular crown conformation, and the second zone has circular crown conformation and is concentric to the first annular zone.

In a 35th aspect according to any one of the preceding aspects from 1st to 22nd said elongated body has along a part of its longitudinal development, optionally along its entire longitudinal development, cross section including:
- a first annular zone comprising said laminar body in which polymerizable matrix formed by the solidification of polymerizable resin is present;
- a second annular zone, radially outside the first annular zone, in which new reinforcement fibers embedded in polymeric matrix formed by solidification and polymerization of liquid polymerizable resin are arranged.

In a 36th aspect according to the preceding aspect, the first annular zone also includes a boundary zone with the second annular zone in which both laminar body parts and new reinforcement fibers are present.

In a 37th aspect according to the 35th or 36th aspect, following solidification of the liquid polymerizable resin, the polymeric matrix present in the first annular zone inside the laminar body is interconnected with the polymeric matrix of the second annular zone.

In a 38th aspect according to the 35th or 36th or 37th aspect, the first annular zone has area measuring between 30 and 80 percent compared to the total cross-sectional area of the elongated body, while the second annular zone has area measuring between 20 and 70 percent compared to the total cross-sectional area of the elongated body.

In a 39th aspect according to the 35th or 36th or 37th or 38th aspects, the first annular zone has area greater than that of the second annular zone.

In a 40th aspect according to the 35th or 36th or 37th or 38th or 39th aspect the first annular zone has circular crown conformation, and the second annular zone has circular crown conformation and is concentric to the first annular zone.

In a 41st aspect according to any one of the preceding aspects, said new reinforcement fibers are placed in the elongated mold so as to extend over a preponderant part of, or the entire, longitudinal cavity, said new reinforcement fibers extending along the entire elongated hollow body extracted from the elongated mold.

In a 42nd aspect according to any one of the preceding aspects, wherein the new reinforcement fibers are in the form of one among:
- unidirectional bundles of fibers oriented along the longitudinal axis of prevalent development,
- fiber mats in which part of the fibers are oriented along the longitudinal axis of predominant development and part of the fibers are oriented transverse to said longitudinal axis,
- fabrics of fibers in which part of the fibers are oriented along the longitudinal axis of predominant development and part of the fibers are oriented transverse to said longitudinal axis,
- nonwoven fabrics of fibers in which part of the fibers are oriented along the longitudinal axis of predominant development and part of the fibers are oriented transverse to said longitudinal axis.

In a 43rd aspect according to any one of the preceding aspects the new reinforcement fibers are glass fibers, carbon fibers, boron fibers, basalt fibers, aramid fibers, natural fibers, or combinations thereof.

In a 44th aspect according to any one of the preceding aspects, preparing the laminar body includes crushing, optionally by mechanical grinding, one or more composite waste material products to obtain said recycled material comprising recycled fibers and recycled polymer particles (powder).

In a 45th aspect according to any one of the preceding aspects, arranging the laminar body includes depositing the recycled material on said side of the containment layer, and optionally binding the recycled material to said side of the containment layer by one or more of:
- application of glue to the recycled material,
- application of glue to the containment layer,
- melting of at least part of the recycled material,
- melting of at least part of the containment layer.

In a 46th aspect according to any one of the preceding aspects, arranging the laminar body includes associating the containment layer with an auxiliary containment layer so that recycled material is interposed between the containment layer and the auxiliary containment layer.

In a 47th aspect according to the preceding aspect, associating the containment layer with the auxiliary containment layer involves:
- arranging the containment layer and the auxiliary containment layer in a mutually overlapping relationship, and
- coupling the containment layer and auxiliary containment layer together.

In a 48th aspect according to any one of the preceding two aspects, during said step of associating the containment layer with the auxiliary containment layer the process includes the following steps:
- (a) moving the containment layer;
- (b) depositing the recycled material on said side of the containment layer while moving the latter;
- (c) moving the auxiliary containment layer above the containment layer and the recycled material deposited on the containment layer itself.

In a 49th aspect according to the preceding aspect:
- step (a) of moving the containment layer involves unrolling the containment layer from a respective feed roller, arranging an unrolled section of the containment layer along a feed plane,
- step (b) of depositing the recycled material involves distributing the recycled material over said unrolled section of the containment layer,
- step (c) of moving the auxiliary containment layer involves unrolling the auxiliary containment layer from a respective feed roller by arranging an unrolled section of the auxiliary containment layer above the recycled material distributed on the unrolled section of the containment layer.

In a 50th aspect according to the preceding aspect couple together the containment layer and the auxiliary containment layer includes:
- (d) binding the unrolled section of the auxiliary containment layer with the unrolled section of the containment layer along one or more connecting lines, optionally obtained by glueing lines, heat-sealing lines, or seam lines, arranged at least longitudinally along the containment layer and the auxiliary containment layer.

In a 51st aspect according to the preceding aspect, steps (b) and (d) occur during said steps (a) and (c) to gradually form a continuous semifinished product and wherein the process involves transversely cutting the continuous semifinished product to define a plurality of laminar bodies of predetermined length.

In a 52nd aspect according to any one of the preceding four aspects, step (b) of depositing also includes a step of adjusting a deposition height of the recycled material by control of one or more of:
- a forward speed of said unrolled section of the containment layer,
- a rate of deposition of the recycled material on the containment layer,
- a position of a recycled material thickness controller operationally active on the recycled material deposited on the containment layer to determine a maximum thickness.

In a 53rd aspect according to any one of the preceding aspects from the 4th to the 52nd, the containment layer is configured to allow the liquid resin to pass through while preventing the recycled material from passing through, optionally wherein the containment layer is a porous material or a material provided with through openings such as a fabric, a nonwoven fabric, a plastic grid film, a metal grid film, a metal mesh, or a plastic mesh.

In a 54th aspect according to any one of the preceding aspects from the 46th to the 53rd, the auxiliary containment layer, if present, is configured to allow the liquid resin to pass through while preventing the recycled material from passing through, optionally wherein the auxiliary containment layer is a porous material or a material provided with through openings such as a fabric, a nonwoven fabric, a plastic grid film, a metal grid film, a metal mesh, or a plastic mesh.

A 55th aspect concerns a pole, wherein the pole is made of reinforced polymer resin, comprising an elongated hollow body of tubular conformation, said elongated hollow body presenting along part of its longitudinal development, optionally along its entire longitudinal development, cross section comprising:
- new reinforcement fibers embedded in new polymeric matrix,
- a laminar body;

wherein at least the new reinforcement fibers are arranged radially inward and/or radially outward from the laminar body;
wherein the laminar body includes at least partially recycled material;
and wherein the laminar body also incorporates new polymeric matrix.

In a 56th aspect according to the preceding aspect, the laminar body includes:
- a containment layer and
- recycled material arranged on one side of the containment layer, such recycled material being obtained by crushing composite material and including recycled fibers and recycled polymer particles.

In a 57th aspect according to any one of the preceding two aspects the pole is obtained by the manufacturing process referred to in any one of preceding aspects from the 1st to the 54th.

In a 58th aspect according to any one of the preceding three aspects, the new reinforcement fibers extend along the entire elongated hollow body.

In a 59th aspect according to any one of the preceding four aspects, the new reinforcement fibers are in the form of one among:
- unidirectional bundles of fibers oriented along a longitudinal axis of predominant development of the elongated hollow body,
- fiber mats in which part of the fibers are oriented along the longitudinal axis of predominant development of the elongated hollow body and part of the fibers are oriented transverse to said longitudinal axis of predominant development of the elongated hollow body,
- nonwoven fabrics of fibers in which part of the fibers are oriented along the longitudinal axis of predominant development of the elongated hollow body and part of the fibers are oriented transverse to said longitudinal axis of predominant development of the elongated hollow body, or
- fiber fabrics in which part of the fibers are oriented along the longitudinal axis of predominant development of the elongated hollow body and part of the fibers are oriented transverse to said longitudinal axis of predominant development of the elongated hollow body.

In a 60th aspect according to any of the five aspects above, new reinforcement fibers are glass fibers, carbon fibers, boron fibers, basalt fibers, aramid fibers, natural fibers, or combinations thereof.

In a 61st aspect according to any one of the preceding six aspects, the laminar body recycled material is bound to the same containment layer by one or more of:
- glueing zones between recycled material and the containment layer,
- welding zones a between recycled material and the containment layer.

In a 62nd aspect according to any one of the preceding seven aspects, when combined with the 56th aspect, the laminar body includes an auxiliary containment layer coupled to the containment layer so that recycled material is interposed between the containment layer and the auxiliary containment layer.

In a 63rd aspect according to any one of the preceding eight aspects, the recycled material in the laminar body has constant thickness and the laminar body includes one or more connecting lines between the containment layer and the auxiliary containment layer.

In a 64th aspect according to the preceding aspect, the connecting lines are obtained by glueing lines, heat-sealing lines, or seam lines, arranged at least longitudinally along the containment layer and the auxiliary containment layer.

In a 65th aspect according to any of the aspects from the 55th to the 64th, the new polymeric matrix in which the new reinforcement fibers are embedded and the new polymeric matrix embedded by the laminar body are derived from solidification of the same liquid resin.

In a 66th aspect according to any one of the aspects from the 55th to the 65th, the new polymeric matrix present in the laminar body fits into the gaps present in the recycled material and the porosity or openings in the containment layer creating a compact containment body.

In a 67th aspect according to any one of the aspects from the 55th to the 66th, in combination with the 62nd aspect, the new polymeric matrix present in the laminar body fits into the gaps present in the recycled material and into the porosity or openings of the containment layer and the auxiliary containment layer, creating a compact containment body.

In a 68th aspect according to any one of the aspects from the 55th to the 67th the containment layer is configured to allow the liquid resin intended to form the new polymeric matrix present in the laminar body to pass through, while preventing the recycled material from passing through.

In a 69th aspect according to any one of the aspects from the 55th to the 68th the containment layer is made of a porous material or a material provided with through openings such as optionally a woven fabric, a nonwoven fabric, a plastic grid film, a metal grid film, a metal mesh, or a plastic mesh.

In a 70th aspect according to any one of the aspects from the 55th to the 69th, in combination with the 62nd aspect, the auxiliary containment layer is configured to allow the liquid resin intended to form the new polymeric matrix present in the laminar body to pass through, while preventing the recycled material from passing through. In a 71st aspect according to any one of the aspects from the 55th to the 70th, in combination with the 62nd aspect, the auxiliary containment layer is made of a porous material or a material provided with through openings such as optionally a woven fabric, a nonwoven fabric, a plastic grid film, a metal grid film, a metal mesh, or a plastic mesh.

In a 72nd aspect according to any one of the aspects from the 55th to the 71st, said new reinforcement fibers include first new reinforcement fibers and second new reinforcement fibers and wherein said elongated hollow body presents along part of its longitudinal development, optionally along its entire longitudinal development, cross section comprising:
- a first annular zone, in which first new reinforcement fibers embedded in new polymeric matrix are arranged,
- a second annular zone, radially external to the first annular zone, in which second new reinforcement fibers embedded in new polymeric matrix are arranged, and
- a third annular zone interposed between the first and second zones and comprising the laminar body.

In a 73rd aspect according to the preceding aspect, the new polymeric matrix present internally in the laminar body is interconnected with the new polymeric matrix of the first annular zone and the new polymeric matrix of the second annular zone.

In a 74th aspect according to any one of the preceding two aspects, the first annular zone, devoid of second new reinforcement fibers, has an area measuring between 10 and 30 percent compared with the total cross-sectional area of the elongated body.

In a 75th aspect according to any one of the preceding three aspects, the second annular zone, devoid of first new reinforcement fibers, has an area measuring between 15 and 35 percent of the total cross-sectional area of the elongated body.

In a 76th aspect according to any one of the preceding four aspects, the third annular zone, optionally without new reinforcement fibers, has an area measuring between 20 and 50 percent of the total cross-sectional area of the elongated body.

In a 77th aspect according to any one of the preceding five aspects the first annular zone has circular crown conformation.

In a 78th aspect according to any one of the preceding six aspects the second zone annular has circular crown conformation and is concentric to the first zone annular.

In a 79th aspect according to any one of the preceding seven aspects, the third annular zone has circular crown conformation and is concentric to the first annular zone and the second zone.

In an 80th aspect according to any of the eight aspects above, the first annular zone has area less than that of the second annular zone, which, in turn, has area less than that of the third annular zone.

In an 81st aspect according to any one of the aspects from the 55th to the 71st, said elongated body has along a part of its longitudinal development, optionally along its entire longitudinal development, cross section including:
- a first annular zone, in which new reinforcement fibers embedded in polymeric matrix formed by solidification and polymerization of liquid polymerizable resin are arranged,
- a second annular zone, radially external to the first annular zone comprising said laminar body in which there is polymeric matrix also formed by solidification and polymerization of liquid polymerizable resin;

In an 82nd aspect according to the preceding aspect, the second annular zone also includes a border zone with the first annular zone in which both a part of the laminar body and first new reinforcement fibers are present.

In an 83rd aspect according to any one of the preceding two aspects, the polymeric matrix present in the second zone inside the laminar body is interconnected with the polymeric matrix of the first annular zone.

In an 84th aspect according to any one of the preceding three aspects, the first annular zone has an area measuring between 20 and 70 percent compared with the total cross-sectional area of the elongated body.

In an 85th aspect according to any one of the preceding four aspects, the second annular zone has an area measuring between 30 and 80 percent of the total cross-sectional area of the elongated body.

In an 86th aspect according to any one of the preceding five aspects, the first annular zone has area less than the second zone.

In an 87th aspect according to any one of the preceding six aspects the first annular zone has circular crown conformation, and the second zone has circular crown conformation and is concentric to the first annular zone. In an 88th aspect according to any one of the aspects from the 55th to the 71st, the elongated hollow body has, along a part of its longitudinal development, optionally along its entire longitudinal development, cross-section including:
- a first annular zone comprising said laminar body in which a polymeric matrix formed by the solidification of the liquid polymerizable resin is present;
- a second annular zone, radially outside the first annular zone, in which new reinforcement fibers embedded in polymeric matrix formed by solidification and polymerization of liquid polymerizable resin are arranged.

In an 89th aspect according to the preceding aspect, the first annular zone also includes a boundary zone with the second annular zone in which both laminar body parts and new reinforcement fibers are present.

In a 90th aspect according to any one of the preceding two aspects, the polymeric matrix which is present in the first annular zone internally to the laminar body is interconnected with the polymeric matrix of the second annular zone.

In a 91st aspect according to any one of the three preceding aspects, the first annular zone has an area measuring between 30 and 80 percent of the total cross-sectional area of the elongated body.

In a 92nd aspect according to any one of the preceding four aspects, the second annular zone has an area measuring between 20 and 70 percent of the total cross-sectional area of the elongated body.

In a 93rd aspect according to any one of the preceding five aspects the first annular zone has area greater than that of the second annular zone.

In a 94th aspect according to any one of the preceding six aspects, the first annular zone has circular crown conformation, and the second annular zone has circular crown conformation and is concentric to the first annular zone.

### DRAWINGS

A description of a non-limiting embodiment of a plant and process for manufacturing an elongated hollow body, for example a pole, from at least partially recycled material is now disclosed. A detailed description of pole for example of the type obtainable by said plant and/or process is also provided.

This description refers to the attached drawings in which:
- Figure 1 schematically shows a plant to manufacture elongated bodies, such as hollow bodies, operating according to the process of the present invention;
- Figure 2 is a schematic plan view showing a step of wrapping various layers of reinforcement fibers (e.g., mats, fabrics, bundles of fibers or nonwoven fabric or other) and a laminar body around a winder, according to one aspect of the process of the invention;
- Figure 3 shows schematically and in cross-section the layers and laminar body of Figure 2 wrapped around the winder; for ease of visualization and understanding of the relative arrangement, the various layers and laminar body are shown spaced radially apart even though in reality they may be wrapped compactly on the winder;
- Figure 3a shows the layers and laminar body of Figure 2 according to a side view showing the profile of the layers and laminar body (again, the representation is schematic, and the components are shown slightly apart from each other even though in reality they are in contact with each other);

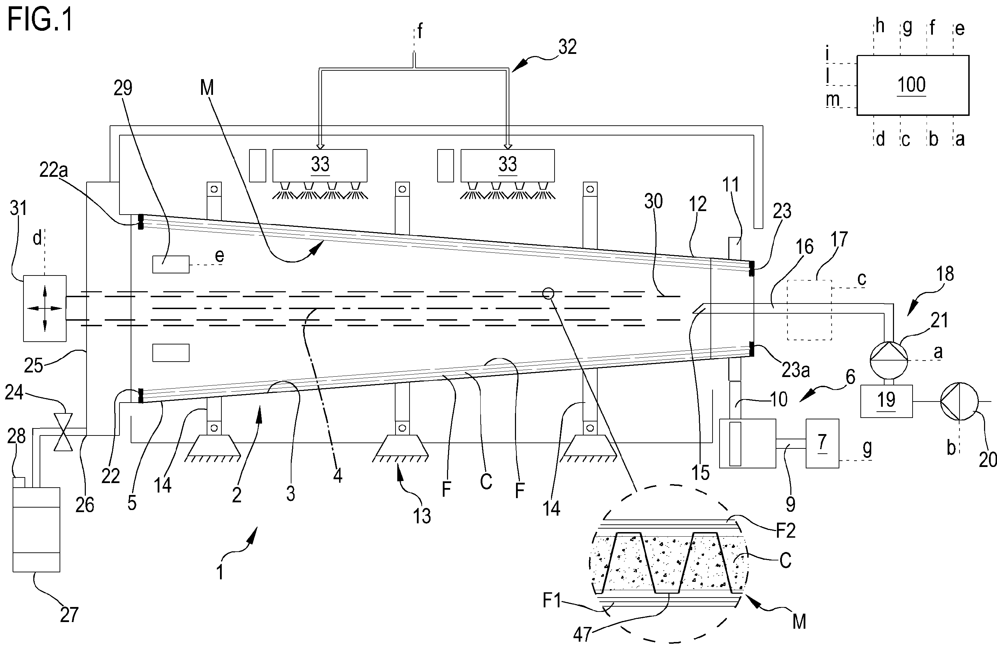

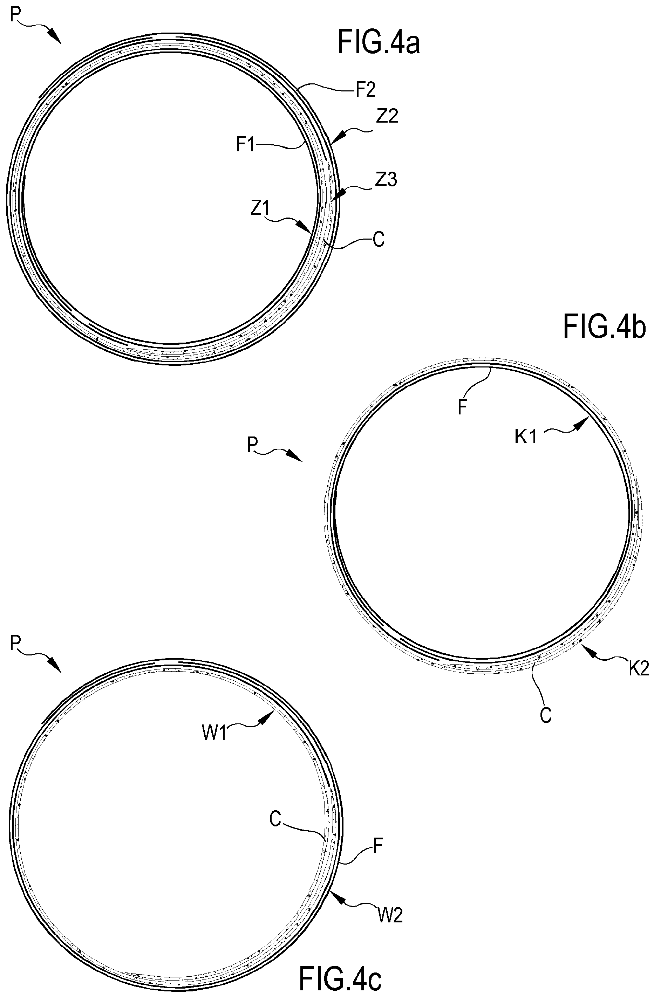

- Figures 4a, 4b, 4c schematically show three alternative cross sections of a pole obtainable with the plant of figure 1: as visible in figures 4c, 4b, 4c, recycled composite material occupies a different position in each cross-section; note that it is also possible to configure a pole that along its longitudinal development has a first tract (first longitudinal portion) whose cross section is of the type according to figure 4a, and an additional or second tract (second longitudinal portion) whose cross section is of the type according to figure 4b or 4c; furthermore, it is also possible to configure a pole having along its longitudinal development a first tract (first longitudinal portion) whose cross-sectional area is of the type according to Figure 4a, a second tract (second longitudinal portion) whose cross-sectional area is of the type according to Figure 4b, and a third tract (third longitudinal portion) whose cross-sectional area is of the type according to Figure 4c;.
- Figure 5 schematically shows a laminar body production line, according to aspects of the invention;
- Figure 6 shows, schematically and in perspective, a laminar body comprising recycled material, for example obtained from the line of Figure 5, that can be used in the plant in Figure 1 for pole production, according to aspects of the present invention; and
- Figure 7 is a longitudinal enlarged cross-section of the laminar body, taken according to section plane VII-VII of Figure 6.

### DEFINITIONS AND CONVENTIONS

Note that in this detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations.

### CONTROL UNIT

The control unit 100 referred to in the following description may comprise a single central unit that handles the functions described below or a plurality of units, such as interconnected units, each configured to handle a respective part of the functions described below.

Control unit 100 may be of the digital type and include, or be connected with, one or more memories designed to store one or more programs that when executed by the control unit 100 configure the unit to perform one or more of the functions described below.

Alternatively, the control unit 100 may be of the analog type and thus with electronic circuitry configured to perform one or more of the functions described below.

Con troll unit 100 may, in a further alternative, combine a digital part and an analog part.

### DETAILED DESCRIPTION

The following description presents first a plant for making elongated hollow bodies such as poles by centrifugal molding, then a process for making elongated hollow bodies of composite material such as poles, and finally an exemplifying pole obtainable by said plant and/or process.

### PLANT FOR PRODUCTION OF ELONGATED HOLLOW BODIES (POLES) MADE OF COMPOSITE MATERIAL

With reference to the above-mentioned figures, a plant for the production of elongated hollow bodies such as poles P, in accordance with aspects of the invention, is globally referred to with reference number 1. In the following description, the plant 1 is configured for the production of tapered hollow bodies P. In any case, the aspects of the invention described here can be applied to the production of any tapered or non-tapered hollow body.

Plant 1 shown in Figure 1 includes at least one elongated mold 2, which is supported so that it can rotate around a longitudinal axis of predominant development 4 of the elongated mold itself. The elongated mold 2 may be monolithic or made from several axial modules consecutively joined together to form an elongated mold of the desired length. In the example shown, elongated mold 2 has an inner surface 3 configured to receive reinforcement fibers F, one or more laminar bodies C (as will be described below), and liquid polymerizable resin. The inner surface 3 of the elongated mold 2 has in the specific example here described a tapered conformation; more in detail, in the example illustrated here, the mold 2 has axisymmetric conformation with respect to its longitudinal axis of predominant development 4, which is also an axis of symmetry. Furthermore, in the example described, both the inner surface 3 and the outer surface 5 of mold 2 are frustoconical and concentric so that, when placing the mold in rotation about said longitudinal axis, there are no eccentric masses. Evidently, plant 1 may comprise a plurality of molds 2 operating in parallel with each other: for simplicity of discussion, a plant 1 with only one mold 2 will be described below, but the features described below may apply to the case of several molds operating in parallel. To place the mold 2 in rotation about the longitudinal axis of predominant development 4 of the mold itself, plant 1 comprises at least one drive device 6 having a motor 7 kinematically connected with the mold 2. In the illustrated example, the motor 7 acts on a drive wheel 8, for example comprising a drive pulley, keyed to the drive shaft 9 and configured to move at least one drive organ 10, such as a drive belt. The drive organ 10 in turn engages a driven wheel 11 connected with the mold. For example, the driven wheel 11 may comprise a circular crown wheel keyed to the outer surface 5 of the side wall of the mold 2 so as to receive motion from the drive organ 10 and transfer it to the mold. Other motion transmission kinematics may be provided with respect to what is shown in Figure 1: for example, the drive shaft 9 may be connected to a toothed drive wheel capable of engaging, directly or after interposition of additional transmission organs, a driven 'wheel' comprising a rack externally carried by the mold.

In any case, as a matter of containing radial encumbrances, the driven wheel or driven circular crown 11, whether in the form of a ring gear, rack, or pulley, is preferably carried by the terminal zone 12 of minimum diameter of the mold's outer side surface.

To allow rotational movement of the mold about its longitudinal axis 4, plant 1 comprises a fixed support structure 13 intended to rotatably support the mold, as described in detail below. In particular, the plant 1 includes a plurality of bearings 14 (for example ball bearings or bearings provided with rolling elements of spherical, barrel, roller or other form) placed externally to the mold itself; depending on the axial dimensions of the mold 2, two or more bearings 14 may be provided: for example, the plant 1 may include three, four or more bearings axially equi-spaced with each other along the longitudinal development of the mold. Each of the bearings 14 has a fixed part constrained to the fixed support structure 13, and a rotating part constrained to a respective section of the outer lateral surface 5 of the mold 2; both the fixed and rotating parts of the bearings 14 surround the lateral surface of the mold 2 and are arranged coaxially with it: in other words, each bearing has an inner diameter such that it engages the corresponding section of mold 1; between the fixed part and the rotating part of each bearing 14 are placed rolling elements (e.g., rollers, balls, barrels, or others) that allow support and rotation at minimal frictional conditions of the mold. As shown in Figure 1, the bearings are engaged so that the longitudinal axis 4 of the mold is substantially horizontal.

In order to enable the feeding of liquid polymerizable resin into the mold, the apparatus 1 also includes at least one injection nozzle 15 configured to operate at one longitudinal end of the mold (it is not excluded using two nozzles each operative at a respective end of the mold); the injection nozzle 15 may comprise an end portion of a feeding tube 16 which is fixedly positioned or carried by a movable head 17 which may be moved close to and away from the mold 2 so that the injection nozzle exhibits the desired axial position relative to the mold. In more detail, the injection nozzle 15 is positioned and configured to ensure the precise and waste-free introduction of liquid polymerizable resin into the aforementioned elongated mold 2: in accordance with a possible implementation, at the time of injection, the injection nozzle 15 operates in a fixed position at an end zone of the mold (optionally at the end zone 12 of minimum diameter of the mold 2) and has a dispensing opening arranged internally to the mold. For example, the dispensing opening of the injection nozzle 15 is placed, at the time of dispensing liquid polymerizable resin, at a predetermined distance (optionally not more than 1/10 of the axial extent of the mold) from the minimum area opening of the mold itself. In the example in Figure 1, the injection opening of nozzle 15 is, at the time of resin injection, about 10-15 cm from the minimum area section of the mold. Again with reference to figure 1, it is noted that injection nozzle 15 is placed at one end of the feed pipe 16 having an additional end connected with a resin feeding device 18 configured to feed polymerizable resin in a liquid state to injection nozzle 15; note that if the movable head 17 is provided, the feed pipe 16 will include two portions: one extending between the head 17 and the nozzle 15 and one (capable of extending and contracting) extending between the head 17 and the feeding device 18. For example, the feeding device 18 may include a feeding reservoir 19 that is pressurized and thus capable of feeding liquid polymerizable resin at pressures above atmospheric pressure: pressurization of the reservoir may be provided, for example, by an air pump 20 operating on the reservoir 19. Alternatively, feeding device 18 may comprise a feed tank 19, in which liquid resin is contained at atmospheric pressure, and a feed pump 21 capable of delivering resin with the appropriate hydraulic head to the injection nozzle.

The liquid polymerizable resin contained in the reservoir 19 and fed by the feeding device 18 includes, for example, at least one active agent, including at least one catalyst and/or accelerant, necessary for the subsequent cross-linking and solidification of the resin itself, which is at an ideal concentration for the subsequent cross-linking step. Obviously, this concentration depends on the type of catalyst and/or accelerant and the type of resin used.

The dispensing device 18 is configured, at each cycle of production of a respective elongated body, to dispense a mass of liquid polymerizable resin equal to or greater than the liquid mass required for the formation of said elongated body. In a possible variation, the amount of resin dispensed at each cycle by the feeding device results in a surplus of material escaping from the mold 2. For this purpose, a processing unit 100 can be configured to control the dispensing device 18 (i.e., one or both of the pumps 19 and 21 as well as, if present, the head 17) and thus control, during each cycle of production of a respective elongated body, the dispensing of the mass of liquid polymerizable resin in excess of the mass quantity required for the formation of said elongated body so as to generate a surplus mass intended to flow out of the mold. In the described example a tapered hollow body is manufactured having two opposite bases (at opposite ends thereof) a larger base and a smaller base. As can be seen from Figure 1, plant 1 has a main flange 22 attached at the longitudinal end of the mold having a relatively larger internal cross-section (compared to that of the opposite end): the main flange 22 protrudes radially inward from mold 2 and has an internal diameter substantially corresponding to the internal diameter of the larger base (of the two bases) of the elongated body being formed. In other words, main flange 22 defines the maximum thickness of liquid resin that can accumulate inside mold 2 during the production cycle at the larger-diameter area of mold 2: any additional resin overflows beyond the flange and is collected. Similarly, an auxiliary flange 23 is attached at the opposite longitudinal end of the mold having a relatively smaller inner cross section (compared to that of the opposite end): auxiliary flange 23 also protrudes radially toward the inside of the mold and has an inner diameter substantially corresponding to the inner diameter of the smaller base of said elongated body being formed. Therefore, auxiliary flange 23 defines the maximum thickness of liquid resin that can accumulate inside the mold during the production cycle at the smaller diameter mold area: any additional resin overflows beyond the auxiliary flange and is collected. As can be seen from Figure 1, the exemplifying mold illustrated therein is of frustoconical shape with the main flange and auxiliary flange 22 and 23 having circular crown conformation: these flanges are concentrically and coaxially arranged with respect to the frustoconical inner surface of said mold so as to define, at each end of the mold, a respective sealing edge 22a, 23a of constant radial extension. In practice, the main flange and auxiliary flange 22 and 23 define an element for adjusting the maximum thickness that will be imparted to the elongated body during production and thus the maximum volume of resin that can be accommodated at each cycle within the mold. In a form of execution the invention, excess resin is collected by a respective manifold 25 located at one or both longitudinal ends of the mold: in the example shown, since the mold is placed with a longitudinal axis of symmetry (which is axis 4) which is horizontal, manifold 25 is placed only at the maximum diameter end of the mold and is configured to collect any excess mass of liquid polymerizable resin escaping from mold 2 and in particular past said main flange 22. The manifold 25 has a discharge port 26, optionally provided with one or more valves 24, configured to discharge any excess liquid resin to a collection body 27. The collection body 27 may, for example, comprise a container or bin of predetermined volume. The collection body 27 is used to accommodate a predetermined amount of liquid polymerizable resin from the collector 25 that may, for example, be recycled. In a variant, it may be permitted, through a charging port 28, to make the addition of fresh resin without active agent (catalyst and/or accelerator) or with a very low content of said active agent, so as to dilute the content of catalyst and/or accelerator present in the mixture resulting from mixing the fresh resin with the resin from the collector 25. Last but not least, if resins are used that require illumination for crosslinking, the plant may include an illuminator 29 controllable by control unit 100, preferably a UV illuminator, positioned relative to mold 2 so as to illuminate a cavity inside the mold and promote crosslinking of said polymerizable resin.

To allow proper deposition of reinforcement fibers F (reinforcement fibers F are new fibers and the layers of fibers may be produced in-line or obtained from separate productions) and laminar body in the mold, the plant 1 may comprise a winder 30, e.g., a tubular winder, on which overlapping layers of reinforcement fibers F and one or more laminar body(s) C, to be deposited in the mold 2, are wound. Winder 30, bearing the layers of reinforcement fibers F and the wrapped laminar body(s), is introduced into mold 2 at the beginning of each production cycle, prior to resin deposition, through one of the two open longitudinal ends of mold 2. Note that Figure 1 schematically depicts the winder with the layers of reinforcement fibers F and the laminar body wound onto the winder (a situation that occurs at the beginning of a pole production process), as well as the same layers of reinforcement fibers F and laminar body C deposited onto the inner surface of mold 2 (a situation that occurs after the unwinding of the reinforcement fibers F and laminar body C from the winder and deposition in the mold): in other words, Figure 1 represents for convenience the F fibers and laminar body C assembly at two successive steps of the process. Once the winder 30 has been introduced into said mold, the layers of reinforcement fibers F and the laminar body or bodies are disengaged from the winder and the winder is pulled out from the mold. Then, by suitably rotating relatively to each other the reinforcement fibers layers F and the laminar body(s) C (which initially appear as a roll altogether) with respect to the mold 2, the unwinding of the layers of reinforcement fibers F and laminar body(s) C is achieved and the fiber layers with and laminar body/bodies are thus deposited on the inner surface 3 of the mold 2: in practice, the layers of reinforcement fibers F and the laminar body/bodies C are wound in one direction (e.g., clockwise) while the mold 2 is operated in rotation in the opposite direction (e.g., counterclockwise) causing the desired unwinding effect; subsequently, the resin can be fed by the feeding device 18. The insertion and extraction movement of the winder 30 can be controlled by a respective actuator assembly 31 controlled by the processing unit 100. Note the extraction of the winder from the layers of fibers + laminar body(s) and from the mold may take place before, while or after unwinding of the layers of fibers + laminar body and deposition of the same on the inner surface of the mold.

In accordance with a further aspect of the invention, the apparatus 1 may further comprise a temperature control assembly 32 associated with the mold 2 and in turn comprising a predetermined number of distributors 33 of a thermoregulation fluid. The distributors 33 are positioned externally to the mold 2 and configured to direct the thermoregulation fluid to at least a plurality of predetermined portions of the outer side surface of the mold so as to effect uniform heat treatment over the entire outer surface of the mold. For this purpose, the distributors 33 may be arranged radially around the outer side surface of the mold 2 by defining a plurality of emission points located according to circular crowns surrounding the mold and axially offset from each other. For example, two or more distributors 33 spaced axially apart along the longitudinal development of the mold 2 and each having a plurality of emission points arranged circumferentially around the mold may be provided.

As for the laminar body C, it may be pre-formed (for example obtained before use in the plant and process described here), or it may be made by a dedicated part of the plant 1. In accordance with one aspect, the laminar body C may be made in a respective production line 34 and then sent to plant 1. Line 34 allows the laminar body to be produced from one or more containment layers 35, 36 and from recycled material 37 obtained by crushing used composite material 38: such recycled material 37 includes recycled fibers, recycled polymer particles, and, frequently, also polymer particles embedding (or carrying attached) recycled fibers. The recycled fibers and particles are evidently very small coming from the crushing of composite material. Polymer particles may have very fine grain size. For example, the particle size of polymer particles may be such that 95 percent by weight of the polymer particles present diameter between 1 and 2000µm, particularly between 1.5 and 1000µm. Fibers are also reduced to very short fibers i.e. such that 95% by weight of fibers present length between 0.1 and 20 mm, particularly between 0.15 and 10 mm.

The particle size of polymer powders can be measured with the particle size analyzer, mod. *MASTERSIZER* 2000 from Malvern Instrument Ltd (UK), which exploits the diffraction of two light sources generated by a powerful He/Ne laser (red beam of 633 nm wavelength) and a laser diode (blue beam of 450 nm wavelength), respectively. The measuring range of the particle size analyzer in question is 0.02÷ 2000µm for suspensions and emulsions and 0.26÷ 2000µm for airborne dust. The *MASTERSIZER* 2000 analyzer uses the laser diffraction technique to measure particle size. The measurement system basically consists of three main elements: the optical bench, the sample dispersion unit, and the software. The dispersed sample passes through the measurement zone of the optical bench, where a laser beam illuminates the particles. An array of detectors then accurately measures the intensity of light scattered by the particles within the sample over a wide range of angles. The dispersion of the sample is controlled by dispersion units: wet and dry. The units ensure that the particles reach the measurement area of the optical bench at the correct concentration and in a stable state of dispersion. Finally, the *MASTERSIZER* 2000 software monitors the system during the measurement process and analyzes the scattering data to calculate a particle size distribution. The sample is usually dispersed in an appropriate liquid or in air. In the former case, a few drops are taken from the suspension subjected to ultrasonication and introduced into the measurement cell, while in the latter case, the powder-air dispersion is passed directly into the range of the beam. Depending on the dispersion mode, in liquid or in air, the corresponding sampling unit is used: accessory HYDRO or SCIROCCO. Please also refer to ISO 3679:2015 method - atmospheric pressure measurement conditions.

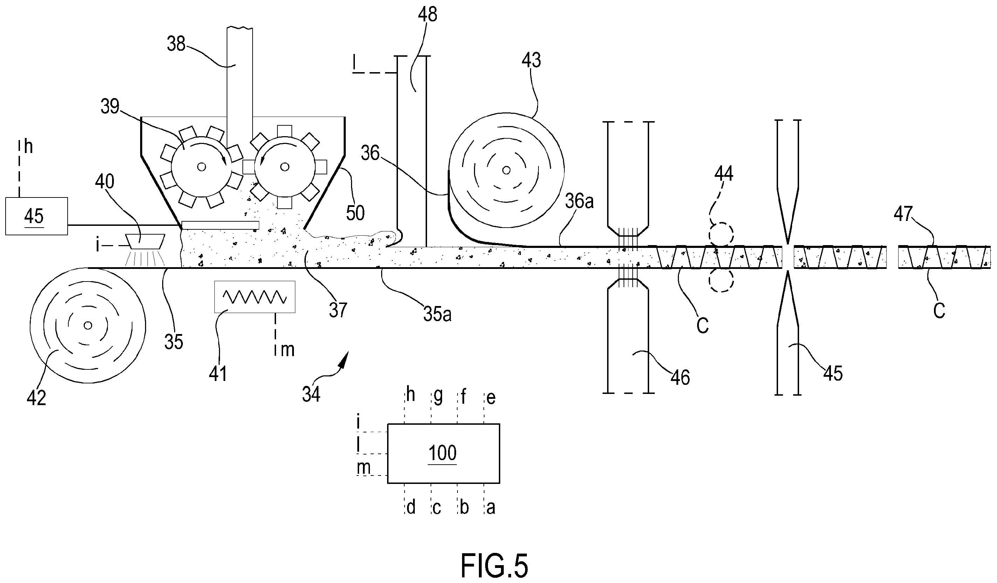

Scanning light microscopy or phase-contrast optical microscopy can be used to measure the length of fibers. As visible from Figure 5, the used composite material 38 is fed to a shredder 39 that forms the recycled material 37 described above. After that, the recycled material, collected for example in a hopper 50, is placed on one side of the containment layer 35. A glue applicator 40 may be provided that distributes glue on the recycled material and/or the exposed surface of the side of the containment layer on which the recycled material 37 is laid in order to stably bind the recycled material to the same side of the containment layer 35. Alternatively or in addition to the application of glue to the recycled material and/or the application of glue to the containment layer, the use of a heater 41 that results in melting or softening of at least a portion of the recycled material and/or at least a portion of the containment layer so as to result in hot coupling of part of the recycled material 37 with the exposed surface of the connecting side of the containment layer 35 may be provided. As visible in Figure 4, the construction of laminar body C may also involve associating containment layer 35 with auxiliary containment layer 36, so that recycled material 37 is interposed between containment layer 35 and auxiliary containment layer 36.

In the example shown in Figure 5, it is envisaged that the containment layer and the auxiliary containment layer 35 and 36, for example supplied by respective feed reels or rollers 42, 43, are driven appropriately so that they are arranged in a mutually overlapping relationship and then coupled together. More specifically, line 34 provides for the movement of containment layer 35, which, for example, is pulled by appropriate feed means 44 (motorized rollers, or grippers, or conveyor belts, or other means) and is unrolled from respective feed roller 42, arranging an unrolled section 35a of containment layer 35 along a feed plane. As mentioned above, recycled material 37 from, for example, the collection hopper 39 (optionally equipped with an appropriate feeder 45) is distributed over the unrolled section of containment layer 35. At the same time, the auxiliary containment layer 36 is moved, e.g., by the feed means 44 (motorized rollers, or grippers, or conveyor belts, or other means), and is unrolled from the respective feed roller 43 so that an unrolled section 36a of the auxiliary containment layer is arranged above the distributed recycled material on the unrolled section 35a of the containment layer. Line 34 then provides a coupling between containment layer 35 and auxiliary containment layer 36. For this purpose, the line 34 includes a bonding station 46, equipped, for example, with a stapler and/or a welding head and/or a glueing head, which provides for bonding the unrolled section 36a of the auxiliary containment layer with the unrolled section 35a of the containment layer along one or more connecting lines 47 creating, depending on the connection technique used one or more seam lines, one or more heat-sealing lines, and/or one or more glueing lines arranged at least longitudinally along the containment layer and the auxiliary containment layer. By making seams and/or heat-sealing and/or glueing between the containment layer and the auxiliary containment layer, the positional stability of the recycled material inside the laminar body and the effective joining of the two containment layers are simultaneously ensured. It should be noted that, as shown in Figure 5, instead of or in addition to dedicated advancing means for layer 35 and/or state 36, advancing means 44 (motorized rollers, or grippers, or conveyor belts, or other means) active on the already formed part of the laminar body can be used as synchronous advancing means of both containment layers 35 and 36, since the formed part of laminar body C is also connected with the tracts of the individual containment layers 35 and 36 extending upstream the bonding station 46.

Line 34 may also include a cutting unit 47 aimed at transversely separating the laminar body C into portions of a predetermined length that can, for example, be coiled for future use.

As mentioned above, control unit 100 may be communicatively connected to and control plant 1 and, for example, pumps 20 and/ 21, moving head 17, actuator assembly 31, lamps 29. Control unit 100 may also be communicatively connected to and control line 34 and, for example, be connected to and control shredder 39, glue applicator 40, heater 41, feed media 44, dosing organ 45, bonding station 46 and cutting unit 47.

### PROCESS OF MAKING AN ELONGATED HOLLOW BODY (SUCH AS A TAPERED POLE) FROM COMPOSITE MATERIAL.

Following what has been described in relation to plant 1, a process for manufacturing an elongated hollow body, such as a pole P, from composite material is now presented. As an example, the process described here uses plant 1 and line 34 illustrated above, although this process could be put in place using equipment other than what is specifically shown here.

The manufacturing process of an elongated hollow body (in the exemplifying case consisting of a tapered pole P) made of composite material includes the steps described below.

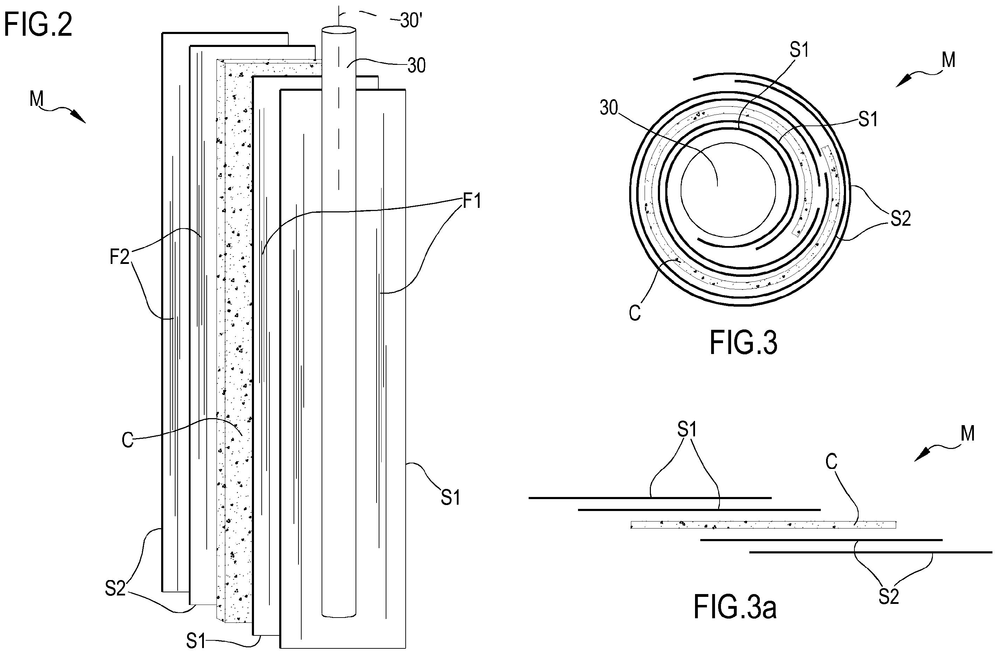

First, outside the elongated mold 2, at least one laminar body C made of at least partially recycled material and new reinforcement fibers F is arranged (Figures 2, 3, 3a). The laminar body C including recycled material and the new reinforcement fibers will then be appropriately arranged inside the mold 2.

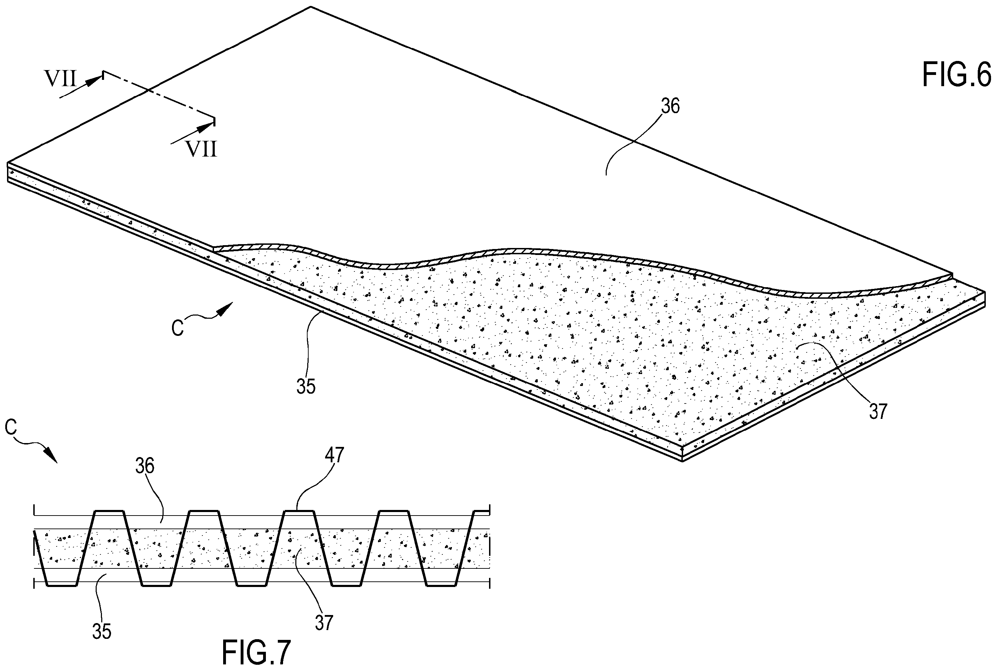

In more detail (see Figures 6 and 7), laminar body C has a containment layer 35 and recycled material 37 obtained by crushing composite material: the recycled material 37 includes recycled fibers and recycled polymer particles and is arranged on one side of the containment layer; laminar body C may also include an auxiliary containment layer 36 opposed to containment layer 35 and coupled with the latter so that the recycled material is contained between the two containment layers.

Externally to mold 2 (see Figures 2 and 3, 3a) new reinforcement fibers F are also prepared.

In a first example, such new reinforcement fibers may comprise at least two sets of fibers identified here as first new reinforcement fibers F1 and second new reinforcement fibers F2 that can be arranged as described below internally to the longitudinal cavity of elongated mold 2. In practice, one arranges the new reinforcement fibers F (in this example F1 and F2) and the laminar body C in an overlapping relationship by making a multilayer M structured so that the laminar body C is placed, internally to the longitudinal cavity of the elongated mold 2, in interposition between:
- at least part of (or all of) the first new reinforcement fibers F1 (which are then all or at least partially arranged radially inward from the laminar body C), and
- at least some (or all) of the second new reinforcement fibers (which are then all or at least partially arranged radially outward from the laminar body C)

In practice, it may be envisaged that all the first new reinforcement fibers F1 are arranged radially inward relative to the laminar body C and that all the second new reinforcement fibers F2 are arranged radially outward relative to the laminar body. Alternatively, it may be provided that only a part of the first new reinforcement fibers F1 is arranged radially inward with respect to the laminar body while a part of the first new reinforcement fibers is arranged radially outward with respect to the same laminar body C; similarly, it may be provided that a part of the second new reinforcement fibers is arranged outward with respect to the laminar body while a part of the second new reinforcement fibers is arranged radially inward with respect to the same laminar body C. As we shall see, this arrangement of the first and second new reinforcement fibers F1 and F2 allows for a profile with cross section structured as shown in Figure 4a.

In other words, the reinforcement fibers F (F1, F2) and the one or more laminar bodies C are arranged in the mold so that, proceeding ideally from the central longitudinal axis of predominant development 4 within the longitudinal cavity of the mold 2 radially toward the wall of the mold itself, one first intercepts one or more layers of only first new reinforcement fibers F1, then one or more layers formed by the laminar body(s) C possibly interspersed with one or more layers of second new reinforcement fibers F1, then one or more layers of second new reinforcement fibers F2 possibly interspersed with one or more layers formed by the laminar body(s) C, and finally exclusively one or more layers of only second new reinforcement fibers F2.

In a second example, the multilayer M may include only new reinforcement fibers F arranged (all or at least some) radially inward from the laminar body C (analogous, for example, to the first F1 fibers in the previous example). As we shall see, this arrangement of the F fibers allows to obtain for example a profile with cross-section structured as shown in Figure 4b. In accordance with this second example, the reinforcement fibers F and the one or more laminar bodies are arranged in the mold so that proceeding ideally from the central longitudinal axis of predominant development 4 inside the longitudinal cavity of the mold 2 radially toward the wall of the mold itself, one first intercepts one or more layers of only reinforcement fibers F, then one or more layers formed by the laminar body/bodies C interspersed with one or more layers of reinforcement fibers F, and finally exclusively one or more layers formed only by the laminar body/bodies C.

In a third example, the multilayer M may include only new reinforcement fibers F arranged (all or at least some) radially outward from the laminar body C. As we shall see, this arrangement of the F fibers allows for a profile with a cross section structured as shown in Figure 4c. In accordance with this third example, the reinforcement fibers F and the one or more laminar bodies C are arranged in the mold so that proceeding ideally from the central longitudinal axis of predominant development 4 inside the longitudinal cavity of the mold 2 radially toward the wall of the mold itself, one first intercepts one or more layers formed only by the laminar body/bodies C, then one or more layers formed by the laminar body/bodies C interspersed with one or more layers of reinforcement fibers F, and finally exclusively one or more layers of only reinforcement fibers F.

Once the laminar body C and the new reinforcement fibers F are properly positioned, the elongated mold 2 is placed in rotation around the axis 4 and an amount of liquid polymerizable resin is introduced into said elongated mold by the one or more injection nozzles 15. With the rotation of the elongated mold 2 around the longitudinal axis of predominant development 4 of the elongated mold itself, centrifugal movement of the liquid polymerizable resin is caused to impregnate the first new reinforcement fibers F1, the one or more laminar bodies C and the second new reinforcement fibers F2 (in the case of the first example described above) or the one or more laminar bodies C and the new reinforcement fibers F (in the case of the second and third examples described above). The liquid polymerizable resin is then solidified, forming an elongated hollow body (pole) P in the solid state, which is then taken out of the elongated mold 2.

It should be pointed out that, in accordance with a further aspect, the new fibers F or F1 and F2 are placed in the elongated mold 2 so as to extend over a preponderant part (for example more than 50% or more than 60% or more than 70% or more than 80% or more than 90% of the entire mold cavity length), or all, of the longitudinal cavity of the mold 2: thus, referring to the hollow body or pole P obtained by the described procedure, the new reinforcement fibers extend along the entire hollow body or pole P (or over a preponderant part of it, for example more than 50% or more than 60% or more than 70% or more than 80% or more than 90% of the entire length of the hollow body or pole P) extracted from the elongated mold 2.

Structurally, the new reinforcement fibers F or the first and second new reinforcement fibers F1 and F2 may be unidirectional bundles of fibers oriented along the longitudinal axis of predominant development, mats of fibers in which part of the fibers are oriented along the longitudinal axis of predominant development and part of the fibers are oriented transverse to said longitudinal axis, or woven or nonwoven fabrics of fibers in which part of the fibers are oriented along the longitudinal axis of predominant development and part of the fibers are oriented transverse to said longitudinal axis; of course the fibers F or the first and second fibers F1 and F2 may alternatively be made according to further configurations as required or, for example include a combination of unidirectional fibers with mats of multidirectional fibers and/or with woven or nonwoven fabrics of multidirectional fibers.

In terms of materials, the new reinforcement fibers F or the first fibers and the second new reinforcement fibers F1 and F2 may be glass fibers, carbon fibers, boron fibers, basalt fibers, aramid fibers, natural fibers, or combinations thereof. Nothing precludes that the first fibers are made from one of the materials mentioned, for example, being glass fibers, and the second fibers from a different material, for example, carbon fibers.

In accordance with another aspect and referring to Figures 1 and 2, prior to placing the fibers and laminar body(s) in the mold 2 there is a step of preparing the new reinforcement fibers and laminar body(s) externally to the mold. This step may include the following sub-steps, carried out externally to the longitudinal cavity of elongated mold 2.

In case it is desired that, once placed in mold 2, the new reinforcement fibers follow the arrangement of the first example described above it is planned to operate as follows in the step of preparing the multilayer M and thus the new reinforcement fibers F1, F2 and laminar body or bodies C outside the mold 2:
- preparing one or more first layers S1 in the first new reinforcement fibers F1,
- preparing one or more second layers S2 in said second new reinforcement fibers,
- superimpose on said one or more first layers S1 of first new reinforcement fibers F1, one or more laminar bodies C and said one or more second layers S2 of second new reinforcement fibers F2 to form a plane multilayer M (Figure 2) in which, proceeding along a thickness of multilayer M, the laminar body C is interposed between the one or more first layers S1 and the one or more second layers S2,
- winding said multilayer M onto winder 30 (which is optionally a tubular winder).

Following winding on the winder 30, the one or more first layers S1 of first new reinforcement fibers F1, the one or more second layers S2 of second new reinforcement fibers F2, and the one or more laminar bodies C are arranged and alternated as described above in relation to the first example: simply as long as the winder is outside the mold the layers are compacted on the winder, while following the insertion of the winder into the mold and the deposition of the layers in the mold these layers move adjacent to the inner surface of the mold 2. It should be noted that the step of arranging the one or more first layers S1 comprising the first new reinforcement fibers F1 involves at least partially overlapping a plurality of first layers arranged in plane with each other (in a solution, the various first layers may be longitudinally and transversely staggered with each other as shown in Figure 2); on the other hand, each of the first layers S1 may have (when arranged in plane) respective widths and respective lengths different from those of the other first layers S1 so as to create a multilayer structure with a degree of randomness.

Similarly, the step of arranging the one or more second layers S2 of second new reinforcement fibers involves at least partially overlapping with each other a plurality of second layers arranged in plane (in a solution, the various second layers may be longitudinally and transversely staggered with each other as shown in Figure 2); each of the second layers S2 may have (when arranged in plane) respective widths and respective lengths different from those of the other second layers so as to create a multilayer structure with a degree of randomness. Furthermore, although the accompanying figures show a single laminar body C that is also arranged in plane and interposed between the first layers S1 of first new reinforcement fibers F1 and the second layers S2 of second new reinforcement fibers F2, nothing precludes the use of several distinct laminar bodies superimposed on each other and appropriately interposed between the first and second layers S1, S2 of new fibers F1, F2.

As shown in Figures 2 and 3a, the first layers S1 of first new reinforcement fibers F1, the second layers S2er of second new reinforcement fibers F2 and the laminar body C have, when arranged in plane, preferably rectangular outline.

After the in-plane arrangement and mutual overlapping of the first layers and second layers S1, S2 with interposition of one or more laminar bodies C, as described above, the winder 30 is arranged with winding axis 30' perpendicular to the width of each of the first layers, of the second layers and the laminar body superimposed on each other, and then the multilayer M formed by the one or more first layers S1, the one or more laminar bodies C, and the one or more second layers S2 is wound onto the winder 30, which is then inserted in a substantially central position inside the elongated mold 2. In fact, the step of arranging the new reinforcement fibers and the laminar body internally to the longitudinal cavity of the elongated mold includes:
- introducing into the elongated mold 2, through an end opening of the elongated mold itself, the winder 30 bearing the multilayer M wrapped on the winder itself, and
- sliding out the winder 30 from the multilayer M and pulling the same winder out of the elongated mold 2.

In case it is desired that, once placed in mold 2, the new reinforcement fibers follow the arrangement of the second or third example (where in practice there is only one set of layers of reinforcement fibers) the arrangement of the multilayer artifact M externally to the mold 2 is done as described above having as new reinforcement fibers only the one or more layers of first new reinforcement fibers (in case one then wants an arrangement inside the mold conforming to the second example) or only the one or more layers of second new reinforcement fibers (in case one then wants an arrangement inside the mold conforming to the third example). As mentioned above, during or after the step of pulling out the winder, the mold 2 is placed in rotation so that the multilayer M is unwound and progressively deposited at the inner surface of the elongated mold 2. After the deposition of the multilayer M inside the mold 2 and the removal of the winder 30 from the mold 2, the nozzle(s) 15 proceed(s) with the step of introducing the liquid polymerizable resin into the elongated mold 2 placed in rotation around the longitudinal axis of predominant development 4 at a predetermined angular speed. In more detail, the liquid polymerizable resin is fed to the one or more injection nozzles 15 at a pressure above atmospheric pressure; in addition, the one or more nozzles operate internally in the longitudinal cavity in a fixed or movable position as required.

The polymerizable resin distributed by the nozzles 15 may be cross-linkable by illumination: in this case, it may be planned to illuminate the longitudinal cavity (with the lamps 29) inside the elongated mold to promote solidification by cross-linking of said liquid polymerizable resin.

The laminar body C used in the process described above may be a pre-formed laminar body or the laminar body C may be formed prior to molding each elongated body as part of the overall process described herein. In each case, preparation of the laminar body C involves crushing, optionally by mechanical grinding, one or more composite waste articles to obtain the recycled material 37 comprising recycled fibers, recycled polymeric particles (powder), and polymeric particles embedding or connected to fibers; the recycled material is laid on one side of the containment layer 35, and optionally bonded to that side of the containment layer by application of glue to the recycled material, application of glue to the containment layer, melting of at least part of the recycled material, or melting of at least part of the containment layer.

In accordance with one aspect, and as already described, the laminar body C may include an auxiliary containment layer 36 that is associated with the containment layer 35, so that recycled material is interposed between the containment layer and the auxiliary containment layer; in practice, the containment layer and the auxiliary containment layer are arranged in a mutually overlapping relationship, and coupled together (as already described in the plant 1 part of the description) to gradually form the laminar body that is then sent to the elongated mold 2.

The step of depositing the recycled material may also include a step of adjusting a deposition height of the recycled material by control /by the control unit described above) of one or more of:
- a forward speed said unrolled section of the containment layer,
- a rate of deposition of the recycled material on the containment layer,
- a position of a thickness controller 48 of the recycled material deposited operationally active on the recycled material deposited on the containment layer to determine a maximum thickness (the position of the thickness controller may also be controlled by control unit 100).

Once the one or more laminar bodies C ate made, it is or they are properly guided and positioned relative to the first and second new reinforcement fibers F1, F2 (or with respect to a single set of fibers F) as described above to form the aforementioned multilayer M, which, properly wound on the winder 30, is inserted into the mold 2.

Then, thanks to the injection of liquid polymerizable resin and the rotation of the mold, there is the movement of the resin in the centrifugal direction, so that the resin impregnates the multilayer M. Depending on the type of multilayer M, impregnation can take place as follows:
- using the first example of multilayer M described above, the liquid polymerizable resin applied from inside the mold successively passes through and impregnates at least a part of first new reinforcement fibers F1, then the laminar body(s) C and any additional first new reinforcement fibers F1, then an additional part(s) of the laminar body(s) C and possibly a first part of second new reinforcement fibers F2 and then the remaining part of second new reinforcement fibers F2;
- using the second example of multilayer M described above, the liquid polymerizable resin applied from inside the mold successively passes through and impregnates at least part of new reinforcement fibers F, then laminar body(s) C and any additional new reinforcement fibers F, then an additional part or parts of laminar body(s) C;
- using the third example of multilayer M described above, the liquid polymerizable resin applied from inside the mold successively passes through a part of laminar body(s) C, then through an additional part of laminar body(s) C and eventually through a first part of new reinforcement fibers F and then through the remaining part of new reinforcement fibers F.

In order to allow efficient impregnation of each laminar body C, the containment layer 35 and, if present, the auxiliary containment layer 36, are configured to allow the liquid polymerizable resin to pass through while preventing the recycled material from passing through. For example, the containment layer and, if present, the auxiliary containment layer are made of a porous material or provided with through openings such as a woven fabric, nonwoven fabric, plastic grid film, metal grid film, metal mesh, or plastic mesh.

The elongated body produced by the described process, which in the case here described is a tapered pole P for example, following solidification of the polymerizable resin is extracted from the elongated mold and has tubular conformation with annular cross section.

In more detail, the elongated body or pole P has along part of its longitudinal development, optionally along its entire longitudinal development, cross section that may be configured as follows depending on the type of multilayer M-manufacture and impregnation process used (see Figures 4a, 4b and 4c).

Using a multilayer artifact M of the type in accordance with the first example the cross section of pole P comprises (Figure 4a):
- a first annular zone Z1, in which the first new reinforcement fibers F1 are arranged embedded in polymeric matrix formed by solidification and polymerization of liquid polymerizable resin,
- a second annular zone Z2, radially external to the first annular zone Z1, in which second new reinforcement fibers F2 are arranged embedded in polymeric matrix formed by solidification and polymerization of liquid polymerizable resin, and
- a third annular zone Z3 interposed between the first and second annular zones and including said laminar body(s) C in which there is polymerizable matrix also formed by the solidification and polymerization of liquid polymerizable resin; the third annular zone may also include a boundary zone with the first annular zone Z1 in which parts of laminar body(s) C and first new reinforcement fibers F1 are both present and a boundary zone with the second annular zone Z2 in which parts of laminar body(s) C and second new reinforcement fibers F2 are both present.

As a result of solidification of the liquid polymerizable resin, the polymeric matrix present in the third zone Z3 internally to laminar body C is then interconnected (due to the porosity or openings present in containment layer 35 and auxiliary containment layer 36 if present) with the polymeric matrix of the first annular zone Z1 and with the polymeric matrix of the second annular zone Z2. In a currently preferred solution, the new polymeric matrix present in the first zone, second zone and third zone is derived from the solidification of liquid polymerizable resin with the same composition.

In terms of size, and in accordance with a further aspect, it should be noted that:
- the first annular zone Z1, devoid of second new reinforcement fibers and not affected by the presence of the C laminar body(s), has area measuring between 10 and 30% with respect to the total cross-sectional area of the elongated body,
- the second annular zone Z2, devoid of first new reinforcement fibers and not affected by the presence of the C laminar body(s), has area measuring between 15 and 35% compared to the total cross-sectional area of the elongated body, and
- the third annular zone Z3 (where the one or more laminar body(s) C and possibly some first new reinforcement fibers and/or some second new reinforcement fibers are present), has area measuring between 20 and 50% compared to the total cross-sectional area of the elongated body.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones Z1, Z2, Z3 are concentric zones, with the same center of symmetry as the cross-section of the elongated body, bounded by an inner closed line and an outer closed line geometrically similar to the outer profile of the cross-section of said elongated body P).

In accordance with a further aspect, the first annular zone Z1 may have a smaller area than the second annular zone Z2, which, in turn, may have a smaller area than the third annular zone Z3.

In addition, from a geometric point of view, in the case of a pole with a circular crown cross-sectional shape:
- the first annular zone Z1 has circular crown conformation,
- the second annular zone Z2 has circular crown conformation and is concentric to the first annular zone,
- the third annular zone Z3 has circular crown conformation and is concentric to the first annular zone Z1 and the second annular zone Z2.

Using a multilayer artifact M of the type in accordance with the second example above, the cross section of pole P comprises (Figure 4b):
- a first annular zone K1, in which new reinforcement fibers F are embedded in polymeric matrix formed by solidification and polymerization of liquid polymerizable resin are arranged,
- a second annular zone K2, radially external to the first annular zone K1, comprising said laminar body(s) C in which there is polymerizable matrix also formed by the solidification and polymerization of liquid polymerizable resin; the second annular zone may also include a boundary zone with the first annular zone K1 in which there are parts of both the laminar body(s) C and first new reinforcement fibers F.

Following the solidification of the liquid polymerizable resin, the polymeric matrix present in the second annular zone internally to the laminar body C is then interconnected (due to the porosity or openings present in the containment layer 35 and the auxiliary containment layer 36 if present) with the polymeric matrix of the first annular zone K1. In a currently preferred solution, the new polymeric matrix present in the first zone K1 and in the second zone K2 derives from the solidification of liquid polymerizable resin with the same composition. Dimensionally, and in accordance with a further aspect, it should be noted that the first annular zone K1, which is not affected by the presence of the laminar body(s) C, has area measuring between 20 and 70 percent compared to the total cross-sectional area of the elongated body, while the second annular zone K2, where the one or more laminar body(s) C and possibly some new reinforcement fibers F are present, has area measuring between 30 and 80 percent compared to the total cross-sectional area of the elongated body P.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones K1, K2 are concentric zones, with the same center of symmetry as the cross-section of the elongated body P, bounded by an inner closed line and an outer closed line geometrically similar to the outer profile of the cross-section of the elongated body P).

In accordance with a further aspect, the first annular zone K1 may have area smaller than the area of second annular zone K2. Also, from a geometric point of view, in the case of cross-sectional pole (circular profile) with circular crown outline:
- the first annular zone K1 has circular crown conformation,
- the second annular zone K2 has circular crown conformation and is concentric to the first annular zone.

Using a multilayer artifact M of the type in accordance with the third example, the cross section of elongated body or pole P (Figure 4c) includes:
- a first annular zone W1 comprising said laminar body(s) C in which there is polymeric matrix also formed by the solidification and polymerization of liquid polymerizable resin;
- a second annular zone W2, radially external to the first annular zone W1, in which new reinforcement fibers F are embedded in polymeric matrix formed by solidification and polymerization of liquid polymerizable resin are arranged.

The first annular zone W1 may also include a boundary zone with the second annular zone W2 in which parts of the laminar body(s) C and new reinforcement fibers F are both present.

Following solidification of the liquid polymerizable resin, the polymeric matrix present in the first zone W1 internally to laminar body C is then interconnected (due to the porosity or openings present in containment layer 35 and auxiliary containment layer 36 if present) with the polymeric matrix in the second zone annular W2. In a currently preferred solution, the new polymeric matrix present in the first zone and second zone is derived from the solidification of liquid polymerizable resin with the same composition.

Dimensionally, and in accordance with a further aspect, it should be noted that the first annular zone W1, where the one or more laminar body(s) C and possibly some new reinforcement fibers F are present, has area measuring between 30 and 80 percent with respect to the total cross-sectional area of the elongated body, while the second annular zone W2, not affected by the presence of the laminar body(s) C, has area measuring between 20 and 70 percent with respect to the total cross-sectional area of the elongated body.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones W1, W2 are concentric zones, with the same center of symmetry as the cross-section of the elongated body, bounded by an inner closed line and an outer closed line geometrically similar to the outer profile of the cross-section of the elongated body).

In accordance with a further aspect, the first annular zone W1 may have area greater than the second annular zone W2.

In addition, from a geometric point of view, in the case of a pole with a circular crown cross-sectional shape:
- the first annular zone W1 has circular crown conformation,
- the second annular zone W2 has circular crown conformation and is concentric to the first annular zone.

Finally, it should be noted that, in accordance with an additional aspect, the process described above can realize poles with a cross section of non-constant structure. For example, the multilayer artifact M may be made to have a first longitudinal tract with a first conformation (e.g., made according to one of the examples 1, 2 or 3 described above), a second longitudinal tract consecutive to the first longitudinal tract having a structure different from the first longitudinal tract (e.g., made according to another of the examples 1, 2 or 3 described above) and possibly a third longitudinal tract consecutive to the second and having a structure different from the second longitudinal tract (e.g., made like the first section or according to yet another of the examples 1, 2 or 3 described above). Consequently, the structure of the cross section of the pole or elongated body thus obtained may not be uniform along the longitudinal development of the pole. For example, the same pole may have a base portion which is stiffer than a middle portion on its turn stiffer than a tip portion of the same pole.

### MOLDED ELONGATED BODY OR POLE

In accordance with another aspect of the invention, an elongated body, and more specifically a composite pole, is now described. The pole described below may be obtained using the plant 1 and/or process illustrated above, or by other manufacturing techniques, for example, by injection molding in a fixed non-rotating mold or by filament winding techniques wherein reinforcement fibers F and laminar body C are wound onto a central core. In the following, reference will be made to an example of a pole, such as a tapered pole, obtained using the plant 1 and process disclosed above.

The composite pole P of the example now described has cross section of constant shape and structure along the longitudinal development of the pole (e.g., configured as in one of Figures 4a, 4b or 4c), with constant or decreasing size.

Alternatively, the pole may have a cross section of non-constant structure (while maintaining the same geometry, e.g. circular, of the profile and constant or decreasing size along the pole). For example, the multilayer artifact M can be made to have a first longitudinal tract with a first cross-sectional conformation (e.g., made according to one of the examples 1, 2, or 3 described above), a second longitudinal tract consecutive to the first one having a cross-section with a different structure from that of the first longitudinal tract (e.g., made according to another of the examples 1, 2 or 3 described above) and optionally a third longitudinal tract consecutive to the second and having a cross-section with structure different from that of the second longitudinal tract (e.g. made like that of the first longitudinal tract or that of the second longitudinal tract or using yet another of the examples 1, 2 or 3 described above).

As an example, the pole may have a first longitudinal tract with cross section of the type illustrated in figure 4a, followed by a second longitudinal tract with cross section of the type illustrated in figure 4b or 4c. Alternatively, the pole may have a first longitudinal tract with cross section of the type illustrated in figure 4b or 4c, followed by a second longitudinal tract with cross section of the type illustrated in figure 4a. In a further alternative, the pole may have a first longitudinal tract with cross section of the type illustrated in figure 4b, followed by a second longitudinal tract with cross section of the type illustrated in figure 4c. In a further alternative, the pole may have a first longitudinal tract with cross section of the type illustrated in figure 4c, followed by a second longitudinal tract with cross section of the type illustrated in figure 4b. Other combinations can be envisaged, in which the cross-sectional structure of the obtained pole may not be uniform along the longitudinal development of the pole. In accordance with one aspect of the invention, the reinforced polymer resin pole P includes an elongated hollow body of tubular conformation with an annular cross section.

In turn, the elongated hollow body has along part of its longitudinal development, or along its entire longitudinal development, cross section structured as follows (see also what has already been discussed in the section on process).

Using a multilayer artifact M of the type in accordance with the first example the cross section of pole P comprises (Figure 4a):
- a first annular zone Z1, in which the first new reinforcement fibers F1 are arranged embedded in polymeric matrix formed by solidification and polymerization of liquid polymerizable resin,
- a second annular zone Z2, radially external to the first annular zone Z1, in which second new reinforcement fibers F2 are arranged embedded in polymeric matrix formed by solidification and polymerization of liquid polymerizable resin, and
- a third annular zone Z3 interposed between the first and second annular zones and including said laminar body(s) C in which there is polymerizable matrix also formed by the solidification and polymerization of liquid polymerizable resin; the third annular zone may also include a boundary zone with the first annular zone Z1 in which parts of laminar body(s) C and first new reinforcement fibers F1 are both present and a boundary zone with the second annular zone Z2 in which parts of laminar body(s) C and second new reinforcement fibers F2 are both present.

As a result of solidification of the liquid polymerizable resin, the polymeric matrix present in the third zone Z3 internally to laminar body C is then interconnected (due to the porosity or openings present in containment layer 35 and auxiliary containment layer 36 if present) with the polymeric matrix of the first annular zone Z1 and with the polymeric matrix of the second annular zone Z2. In a currently preferred solution, the new polymeric matrix present in the first zone, second zone and third zone is derived from the solidification of liquid polymerizable resin with the same composition.

In terms of size, and in accordance with a further aspect, it should be noted that:
- the first annular zone Z1, devoid of second new reinforcement fibers and not affected by the presence of the C laminar body(s), has area measuring between 10 and 30% with respect to the total cross-sectional area of the elongated body,
- the second annular zone Z2, devoid of first new reinforcement fibers and not affected by the presence of the C laminar body(s), has area measuring between 15 and 35% compared to the total cross-sectional area of the elongated body, and
- the third annular zone Z3 (where the one or more laminar body(s) C and possibly some first new reinforcement fibers and/or some second new reinforcement fibers are present), has area measuring between 20 and 50% compared to the total cross-sectional area of the elongated body.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones Z1, Z2, Z3 are concentric zones, with the same center of symmetry as the cross-section of the elongated body, bounded by an inner closed line and an outer closed line geometrically similar to the outer profile of the cross-section of said elongated body P).

In accordance with a further aspect, the first annular zone Z1 may have a smaller area than the second annular zone Z2, which, in turn, may have a smaller area than the third annular zone Z3.

In addition, from a geometric point of view, in the case of a pole with a circular crown cross-sectional shape:
- the first annular zone Z1 has circular crown conformation,
- the second annular zone Z2 has circular crown conformation and is concentric to the first annular zone,
- the third annular zone Z3 has circular crown conformation and is concentric to the first annular zone Z1 and the second annular zone Z2.

Using a multilayer artifact M of the type in accordance with the second example above, the cross section of pole P comprises (Figure 4b):
- a first annular zone K1, in which new reinforcement fibers F are embedded in polymeric matrix formed by solidification and polymerization of liquid polymerizable resin are arranged,
- a second annular zone K2, radially external to the first annular zone K1, comprising said laminar body(s) C in which there is polymerizable matrix also formed by the solidification and polymerization of liquid polymerizable resin; the second annular zone may also include a boundary zone with the first annular zone K1 in which there are parts of both the laminar body(s) C and first new reinforcement fibers F.

Following the solidification of the liquid polymerizable resin, the polymeric matrix present in the second annular zone internally to the laminar body C is then interconnected (due to the porosity or openings present in the containment layer 35 and the auxiliary containment layer 36 if present) with the polymeric matrix of the first annular zone Z1. In a currently preferred solution, the new polymeric matrix present in the first zone K1 and in the second zone K2 derives from the solidification of liquid polymerizable resin with the same composition. Dimensionally, and in accordance with a further aspect, it should be noted that the first annular zone K1, which is not affected by the presence of the laminar body(s) C, has area measuring between 20 and 70 percent compared to the total cross-sectional area of the elongated body, while the second annular zone K2, where the one or more laminar body(s) C and possibly some new reinforcement fibers F are present, has area measuring between 30 and 80 percent compared to the total cross-sectional area of the elongated body P.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones K1, K2 are concentric zones, with the same center of symmetry as the cross-section of the elongated body P, bounded by an inner closed line and an outer closed line geometrically similar to the outer profile of the cross-section of the elongated body P).

In accordance with a further aspect, the first annular zone K1 may have area smaller than the area of second annular zone K2. Also, from a geometric point of view, in the case of cross-sectional pole (circular profile) with circular crown outline:
- the first annular zone K1 has circular crown conformation,
- the second annular zone K2 has circular crown conformation and is concentric to the first annular zone.

Using a multilayer artifact M of the type in accordance with the third example, the cross section of elongated body or pole P (Figure 4c) includes:
- a first annular zone W1 comprising said laminar body(s) C in which there is polymeric matrix also formed by the solidification and polymerization of liquid polymerizable resin;
- a second annular zone W2, radially external to the first annular zone W1, in which new reinforcement fibers F are embedded in polymeric matrix formed by solidification and polymerization of liquid polymerizable resin are arranged.

The first annular zone W1 may also include a boundary zone with the second annular zone W2 in which parts of both the laminar body(s) C and new reinforcement fibers F are present.

Following solidification of the liquid polymerizable resin, the polymeric matrix present in the first zone W1 internally to laminar body C is then interconnected (due to the porosity or openings present in containment layer 35 and auxiliary containment layer 36 if present) with the polymeric matrix in the second zone annular W2. In a currently preferred solution, the new polymeric matrix present in the first zone and second zone is derived from the solidification of liquid polymerizable resin with the same composition.

Dimensionally, and in accordance with a further aspect, it should be noted that the first annular zone W1, where the one or more laminar body(s) C and possibly some new reinforcement fibers F are present, has area measuring between 30 and 80 percent with respect to the total cross-sectional area of the elongated body, while the second annular zone W2, not affected by the presence of the laminar body(s) C, has area measuring between 20 and 70 percent with respect to the total cross-sectional area of the elongated body.

The above percentages apply both in the case of a pole with a perfectly circular cross-sectional shape where each annular zone is defined by an ideal circular crown, and in the case of a pole with a cross-section other than circular, but still of a shape having a center of symmetry (in this second case, the annular zones W1, W2 are concentric zones, with the same center of symmetry as the cross-section of the elongated body, bounded by an inner closed line and an outer closed line geometrically similar to the outer profile of the cross-section of the elongated body).

In accordance with a further aspect, the first annular zone W1 may have area greater than the second annular zone W2.

In addition, from a geometric point of view, in the case of a pole with a circular crown cross-sectional shape:
- the first annular zone W1 has circular crown conformation,
- the second annular zone W2 has circular crown conformation and is concentric to the first annular zone.

In all the examples discussed and as already illustrated, each laminar body C includes at least partially recycled material 37 and is formed by a containment layer 35 and possibly an auxiliary containment layer 36 opposed to the containment layer. The laminar body also includes recycled material 37 arranged on one side of the containment layer (and in the illustrated example interposed between the containment layer and auxiliary containment layer); the recycled material is obtained by crushing composite material and including recycled fibers and recycled polymeric particles as well as recycled polymeric particles encompassing or connected to recycled fibers. The laminar body recycled material is bonded to the containment layer and if present to the auxiliary containment layer by means of one or more of:
- glueing zones between recycled material and the containment layer and/or the auxiliary containment layer, and
- welding zones between recycled material and the containment layer and/or the auxiliary containment layer.

As explained above, such recycled material obtained by crushing composite material includes recycled fibers, recycled polymer particles, with possibly some particles embedding or being attached to recycled fibers; the polymer particles may have very fine grain size. For example, the particle size of the polymer particles may be such that 95% by weight of the polymer particles present diameter between 1 and 2000µm, particularly between 1.5 and 1000µm. Fibers are also reduced to very short fibers i.e. such that 95% by weight of fibers present length between 0.1 and 20 mm, particularly between 0.15 and 10 mm.

Geometrically, the recycled material 37 present within the laminar body has constant thickness and is evenly distributed on the containment layer or between the containment layer and the auxiliary containment layer.

The containment layer and, if present, the auxiliary containment layer 35 and 36 are thin bodies in which the thickness is enormously less than the other two dimensions; for example, the grammage of each of layers 35 and 36 may range between 10 and 300 grams per m². The thickness of each of these layers is enormously less than the other two dimensions and, for example, may range between 0.05 mm and 3 mm. The overall laminar body thickness, substantially due to the presence of the recycled material arranged between containment layer 35 and auxiliary containment layer 36 can, depending on the application range from 0.5 mm to 50 mm, optionally 1 to 5 mm.

The laminar body C may also include one or more seam lines 47 between the containment layer and the auxiliary containment layer, optionally obtained by glueing lines, heat-sealing lines, or seam lines, arranged at least longitudinally along the containment layer 35 and the auxiliary containment layer 36. The possible presence of seam lines transverse to longitudinal ones is not excluded.

For the purpose of allowing the liquid polymerizable resin to pass through the laminar body, the containment layer 35 is configured to allow the liquid resin to pass through while preventing the recycled material from passing through; e.g., example, the containment layer 35 is a porous material or provided with through openings such as a fabric (e.g., formed of plastic fibers or fibers of glass or carbon or otherwise), a nonwoven fabric (e.g., formed of plastic fibers or fibers of glass or carbon or otherwise), a plastic grid film, a metal grid film, a metal mesh, a plastic mesh. Similarly, auxiliary containment layer 36, if present, can be configured to allow the liquid resin to pass through while preventing the recycled material from passing through; in a currently preferred variant, the auxiliary containment layer may be a porous material or provided with through openings such as a woven fabric (e.g., formed from plastic fibers or fibers of glass or carbon or other nature yet), a nonwoven fabric (e.g., formed from plastic fibers or fibers of glass or carbon or other nature yet), a plastic grid film, a metal grid film, a plastic mesh or a metal mesh. It should be noted that due to the porosity of the containment layer and any auxiliary containment layer of the laminar body and due to the fact that the shredded recycled material within the laminar body leaves gaps between the polymer particles and the shredded fibers, the liquid resin impregnates the said layer or layers and occupies the gaps present in the shredded recycled material.

In detail, the new polymeric matrix present in laminar body C fits into the interstices present in the recycled material 37 and into the porosity or openings of containment layer 35 and (if present) auxiliary containment layer 36 creating a compact laminar body C. In other words, the laminar body also incorporates new polymeric matrix, and this new polymeric matrix present internally in the laminar body C is interconnected with the new polymeric matrix of the annular zone(s) lacking the laminar body C. For example, the new polymeric matrix present in the first, second, and if present in the third annular zone may be derived from the same liquid polymerizable resin. As for the new reinforcement fibers described above (i.e., fibers and fibers F1, F2) preferably extend along the entire elongated hollow body or P pole; the fibers F or F1 and F2 may be in the form of one between:
- unidirectional bundles of fibers oriented along a longitudinal axis of predominantly elongated hollow body development,
- mats of fibers in which part of the fibers are oriented along the longitudinal axis of predominant development of the elongated hollow body and part of the fibers are oriented transverse to said longitudinal axis of the elongated hollow body, or
- woven/nonwoven fabrics of fibers in which part of the fibers are oriented along the longitudinal axis of predominant development of the elongated hollow body and part of the fibers are oriented transverse to said longitudinal axis of the elongated hollow body.

As mentioned in the process section, the reinforcement fibers F or the first and second reinforcement fibers F1, F2, as the case may be, are for example: glass fibers, carbon fibers, boron fibers, basalt fibers, aramid fibers, natural fibers or combinations thereof. It is not excluded that the first and second reinforcement fibers F1 and F2 may be in a different fiber material.

## Claims

1. Process of manufacturing an elongated hollow body, optionally a tapered pole, from composite material, said process comprising the following steps:
- arranging new reinforcement fibers (F; F1, F2) and a laminar body (C) internally to a longitudinal cavity of an elongated mold (2), so that the laminar body (C) is placed internally to the longitudinal cavity of the elongated mold (2) adjacent to the new reinforcement fibers (F; F1, F2), which are arranged radially inward and/or radially outward from the laminar body (C); wherein the laminar body (C) is made of at least partially recycled material (37), said laminar body (C) including:
o a containment layer (35) and
o recycled material (37), in particular obtained by crushing composite material, the recycled material (37) including recycled fibers and recycled polymer particles, said recycled material (37) being arranged on one side of the containment layer (35);
- introducing liquid polymerizable resin into said elongated mold (2);
- placing the elongated mold (2) in rotation around a longitudinal axis of predominant development (4) of the elongated mold itself to bring about centrifugal movement of the liquid polymerizable resin and impregnate with said liquid polymerizable resin said new reinforcement fibers (F; F1, F2) and said laminar body (C);
- solidifying said liquid polymerizable resin by forming an elongated hollow body (P) in the solid state; and
- extracting said elongated hollow body (P) in the solid-state from the elongated mold (2).

2. Process according to claim 1, wherein prior to the step of arranging said new reinforcement fibers (F; F1, F2) and said laminar body (C) internally to the longitudinal cavity of the elongated mold (2) the following further steps are performed externally to the longitudinal cavity of the elongated mold (2):
- preparing one or more layers in said new reinforcement fibers (F; F1, F2), optionally wherein each of said layers has respective width and respective length different from those of the other layers;
- superimposing said one or more layers and said laminar body (C) to form a multilayer (M);
- wrapping said multilayer (M) on a winder (30);
and wherein the step of arranging said new reinforcement fibers (F; F1, F2) and said laminar body (C) internally to the longitudinal cavity of the elongated mold (2) includes:
- introducing into said elongated mold (2) the winder (30) bearing said multilayer (M) coiled on the same winder, said introduction occurring through at least one end opening of the elongated mold (2);
- pulling the winder (30) out of the multilayer (M) and extracting the winder (30) out of the elongated mold (2);
- during or after extracting the winder (30) out of the elongated mold (2), placing the mold (2) in rotation so that the multilayer (M) is unwound and progressively deposited at an inner surface of the elongated mold (2).

3. Process according to any one of the preceding claims, wherein during said step of introducing the liquid polymerizable resin the elongated mold (2) is placed in rotation about the longitudinal axis of predominant development (4) at a predetermined angular velocity, and
wherein introducing liquid polymerizable resin into said elongated mold (2) includes feeding the liquid polymerizable resin to one or more injection nozzles (15) at a pressure above atmospheric pressure, said one or more injection nozzles (15) operating internally to the longitudinal cavity;
optionally wherein:
- said liquid polymerizable resin is of the cross-linkable type by illumination, and wherein the process provides for illuminating the longitudinal cavity inside the elongated mold (2) to promote said solidification by cross-linking of said liquid polymerizable resin.

4. Process according to any one of the preceding claims, wherein, following the step of arranging said new reinforcement fibers (F) and said laminar body (C) internally to the longitudinal cavity of the elongated mold (2), the new reinforcement fibers (F) and the laminar body (C) are positioned so that, proceeding radially from the longitudinal axis of predominant development (4) to a/said inner surface of the elongated mold (2), the following are sequentially intercepted:
- one or more layers of only new reinforcement fibers (F) are intercepted first,
- then one or more layers formed by the laminar body (C) optionally interspersed with one or more layers of new reinforcement fibers (F) are intercepted, and
- then one or more layers formed only by the laminar body (C) are intercepted;
or
wherein, following the step of arranging said new reinforcement fibers (F) and said laminar body (C) internally to the longitudinal cavity of the elongated mold (2), the new reinforcement fibers (F) and the laminar body (C) are positioned so that, proceeding radially from the longitudinal axis of predominant development (4) to a/said internal surface of the elongated mold (2), the following are sequentially intercepted:
- first one or more layers formed only by the laminar body (C) are intercepted,
- then one or more layers formed by the laminar body (C) optionally interspersed with one or more layers of new reinforcement fibers (F) are intercepted, and
- then one or more layers of only new reinforcement fibers (F) are intercepted.

5. Process according to any one of the preceding claims from 1 to 3, wherein said new reinforcement fibers include first new reinforcement fibers (F1) and second new reinforcement fibers (F2); and
wherein, following the step of arranging said new reinforcement fibers and said laminar body (C) internally to the longitudinal cavity of the elongated mold (2), the laminar body (C) is placed internally to the longitudinal cavity of the elongated mold (2) in interposition between at least a portion of the first new reinforcement fibers (F1), arranged radially inward from the laminar body (C), and at least a portion of the second new reinforcement fibers (F2), arranged radially outward from the laminar body (C);
optionally wherein, following the step of arranging said new reinforcement fibers and said laminar body (C) internally to the longitudinal cavity of the elongated mold (2) the new reinforcement fibers and the laminar body (C) are positioned so that, proceeding radially from the longitudinal axis of predominant development (4) to a/said internal surface of the elongated mold (2), first one or more layers of only first new reinforcement fibers (F1) are intercepted, then one or more layers formed by the laminar body (C) optionally interspersed with one or more layers of first new reinforcement fibers (F1), then one or more layers of second new reinforcement fibers (F2) optionally interspersed with one or more layers formed by the laminar body (C), and finally exclusively one or more layers of only second new reinforcement fibers (F2).

6. Process according to claim 5, when dependent on claim 2, wherein, prior to the step of arranging said new reinforcement fibers and said laminar body (C) internally to the longitudinal cavity of the elongate mold (2), said steps performed externally to the longitudinal cavity of the elongate mold (2) are as follows:
- preparing one or more layers in said new reinforcement fibers (F; F1, F2) includes preparing one or more first layers in said first new reinforcement fibers (F1), optionally wherein each of said first layers has respective width and respective length different from those of the other first layers, and preparing one or more second layers in said second new reinforcement fibers, optionally wherein each of said second layers has respective width and respective length different from those of the other second layers,
- superimposing said one or more layers and said laminar body (C) to form a multilayer (M) includes superimposing on said one or more first layers said the laminar body (C) and said one or more second layers to form the multilayer (M) in which, proceeding along a thickness of the multilayer (M), the laminar body (C) is interposed between the one or more first layers of first new reinforcement fibers (F1) and the one or more second layers of second new reinforcement fibers (F2),
wherein prior to said wrapping step the one or more first layers, the one or more second layers, and the laminar body (C) are arranged flat and at least partially overlapping with each other.

7. Process according to any one of the preceding claims wherein, following the step of introducing the liquid polymerizable resin into the elongated mold (2) and rotating the elongated mold (2), the liquid polymerizable resin moves in a centrifugal direction and impregnates the multilayer as follows:
- in the case of the first alternative of claim 4, the liquid polymerizable resin successively passes through and impregnates at least a portion of new reinforcement fibers (F), then a portion of the laminar body (C) and any additional new reinforcement fibers, (F), then an additional portion of the laminar body (C); or
- in the case of the second alternative of claim 4, the liquid polymerizable resin successively passes through and impregnates at least a part of the laminar body (C), then any additional part of the laminar body (C) and optionally a first portion of new reinforcement fibers (F) and then the remaining portion of new reinforcement fibers (F); or
- in the case of claim 5 or 6, the liquid polymerizable resin successively passes through and impregnates at least a portion of first new reinforcement fibers (F1), then a portion of the laminar body (C) and any additional first new reinforcement fibers (F1), then an additional portion of the laminar body (C) and optionally a first portion of second new reinforcement fibers (F2) and then a remaining portion of second new reinforcement fibers (F2).

8. Process according to any one of the preceding claims when combined with claim 5 or 6, wherein the elongated hollow body (P) extracted from the elongated mold (2) presents tubular conformation with annular cross-section, said elongated hollow body (P) presenting along part of its longitudinal development, optionally along its entire longitudinal development, cross-section comprising:
- a first annular zone (Z1), in which the first new reinforcement fibers (F1) are arranged and are embedded in polymeric matrix formed by solidification of said liquid polymerizable resin,
- a second annular zone (Z2), radially external to the first annular zone (Z1), in which the second new reinforcement fibers (F2) are arranged and are embedded in polymeric matrix formed by solidification of said liquid polymerizable resin, and
- a third annular zone interposed between the first and second annular zones (Z1 and Z2) and comprising said laminar body (C) in which polymetric matrix formed by solidification of said liquid polymerizable resin is present; the third annular zone optionally comprising a boundary zone with the first annular zone (Z1), in which parts of the laminar body (C) and first new reinforcement fibers (F1) are present, and a boundary zone with the second annular zone (Z2), in which parts of the laminar body (C) and second new reinforcement fibers (F2) are present;
wherein, following said solidification step of the liquid polymerizable resin, the polymeric matrix present internally in the laminar body (C) is interconnected with the polymeric matrix of the first annular zone (Z1) and with the polymeric matrix of the second annular zone (Z2);
optionally wherein:
- the first annular zone (Z1), devoid of second new reinforcement fibers (F2), has an area measuring between 10 and 30% compared with the total cross-sectional area of the elongated hollow body (P),
- the second annular zone (Z2), lacking first new reinforcement fibers (F1), has an area measuring between 15 and 35% of the total cross-sectional area of the elongated hollow body (P),
- the third annular zone, which is devoid of new reinforcement fibers, has an area measuring between 20 and 50% of the total cross-sectional area of the elongated hollow body (P),
- the first annular zone (Z1) has circular crown conformation,
- the second annular zone (Z2) has circular crown conformation and is concentric to the first annular zone,
- the third annular zone has circular crown conformation and is concentric to the first annular zone and the second annular zone (Z2);
more optionally wherein the first annular zone (Z1) has area measuring less than the second annular zone (Z2), which in turn has area measuring less than the third annular zone (Z3).

9. Process according to any one of the preceding claims, when combined with claim 4, wherein:
in the first alternative of claim 4, the elongated hollow body (P) extracted from the elongated mold (2) presents tubular conformation with annular cross-section, said elongated hollow body (P) presenting along part of its longitudinal development, optionally along its entire longitudinal development, cross-section comprising:
- a first annular zone (K1), in which new reinforcement fibers (F) embedded in polymeric matrix formed by solidification of the liquid polymerizable resin are arranged,
- a second annular zone (K2), radially external to the first annular zone (K1), comprising said laminar body (C) in which there is polymetric matrix also formed by solidification of the liquid polymerizable resin; the second annular zone (K2) optionally comprising a boundary zone with the first annular zone (K1) in which part of the laminar body (C) and new reinforcement fibers (F) are both present;
wherein, following the solidification of the liquid polymerizable resin, the polymeric matrix present in the second annular zone (K2) inside the laminar body (C) is interconnected with the polymeric matrix of the first annular zone (K1);
optionally wherein the first annular zone (K1) has area measuring between 20 and 70% compared to the total cross-sectional area of the elongated hollow body (P), and the second annular zone (K2) has area measuring between 30 and 80% compared to the total cross-sectional area of the elongated hollow body (P);
even more optionally wherein the first annular zone (K1) has smaller area than the second annular zone (K2) and wherein the first annular zone (K1) has circular crown conformation and the second annular zone
(K2) has circular crown conformation and is concentric to the first annular zone (K1);
or
in the second alternative of claim 4, the elongated hollow body (P) extracted from the elongated mold (2) presents tubular conformation with annular cross-section, said elongated hollow body (P) presenting along part of its longitudinal development, optionally along its entire longitudinal development, cross-section comprising:
- a first annular zone (W1) comprising said laminar body (C) in which polymetric matrix formed by solidification of the polymerizable liquid resin is present;
- a second annular zone (W2), radially outward from the first annular zone (W1), in which new reinforcement fibers (F) embedded in polymeric matrix formed by solidification of the liquid polymerizable resin are present, optionally wherein the first annular zone (W1) also includes a boundary zone with the second annular zone (W2) in which part of the laminar body (C) and new reinforcement fibers (P) are both present;
wherein, following the solidification of the liquid polymerizable resin, the polymeric matrix present in the first annular zone (W1) inside the laminar body (C) is interconnected with the polymeric matrix of the second annular zone (W2);
optionally wherein the first annular zone (W1) has area measuring between 30 and 80% compared to the total cross-sectional area of the elongated hollow body (P), while the second annular zone (W2) has area measuring between 20 and 70% compared to the total cross-sectional area of the elongated hollow body (P);
even more optionally wherein the first annular zone (W1) has area greater than that of the second annular zone (W2); and wherein the first annular zone (W1) has circular crown conformation, and the second annular zone (W2) has circular crown conformation and is concentric to the first annular zone (W1).

10. Process according to any one of the preceding claims, wherein the new reinforcement fibers (F; F1, F2) are placed in the elongated mold (2) so as to extend over a preponderant portion of, or the entire, longitudinal cavity;
wherein the new reinforcement fibers (F; F1, F2) are in the form of one between:
- unidirectional bundles of fibers oriented along the longitudinal axis of prevalent development,
- fiber mats in which part of the fibers are oriented along the longitudinal axis of predominant development (4) and part of the fibers are oriented transverse to said longitudinal axis of predominant development (4),
- fiber fabrics in which part of the fibers are oriented along the longitudinal axis of predominant development (4) and part of the fibers are oriented transverse to said longitudinal axis of predominant development (4),
- nonwoven fabrics of fibers in which part of the fibers are oriented along the longitudinal axis of predominant development (4) and part of the fibers are oriented transverse to said longitudinal axis of predominant development (4);
optionally wherein the new reinforcement fibers (F; F1, F2) are glass fibers, carbon fibers, boron fibers, basalt fibers, aramid fibers, natural fibers or combinations thereof.

11. Process according to any one of the preceding claims, comprising preparing the laminar body (C), wherein preparing the laminar body (C) comprises crushing, optionally by mechanical grinding, one or more composite waste products to obtain said recycled material (37) comprising recycled fibers and recycled polymeric particles;
wherein preparing the laminar body (C) further includes depositing the recycled material (37) on said side of the containment layer (35), and optionally binding the recycled material (37) to said side of the containment layer (35) by one or more of:
- application of glue to the recycled material (37),
- application of glue to the containment layer (35),
- melting of at least part of the recycled material (37),
- melting of at least part of the containment layer (35);
further wherein preparing the laminar body (C) includes associating the containment layer (35) with an auxiliary containment layer (36) so that the recycled material (37) is interposed between the containment layer and the auxiliary containment layer (36);
wherein associating the containment layer (35) with the auxiliary containment layer (36) includes:
- arranging the containment layer (35) and the auxiliary containment layer (36) in a mutually overlapping relationship, and
- coupling the containment layer (35) and auxiliary containment layer (36) together;
wherein during said step of associating the auxiliary containment layer (36) with the containment layer (35) the process includes the following steps:
- (a) moving the containment layer (35);
- (b) depositing the recycled material (37) on said side of the containment layer (35) while moving the latter;
- (c) moving the auxiliary containment layer (36) above the containment layer (35) and the recycled material (37) deposited on the containment layer itself;
wherein:
- step (a) of moving the containment layer (35) involves unrolling the containment layer (35) from a respective feed roller, arranging an unrolled section of the containment layer (35) along a feed plane,
- step (b) of depositing the recycled material (37) involves distributing the recycled material (37) over said unrolled section of the containment layer (35),
- step (c) of moving the auxiliary containment layer (36) involves unrolling the auxiliary containment layer (36) from a respective feed roller, arranging an unrolled section of the auxiliary containment layer (36) on top of the recycled material (37) distributed on the unrolled section of the containment layer (35);
and wherein coupling together the containment layer (35) and auxiliary containment layer (36) includes:
- (d) binding the unrolled section of the auxiliary containment layer (36) with the unrolled section of the containment layer (35) along one or more joining lines, optionally obtained by means of glueing lines, heat-sealing lines or stitching lines, arranged at least longitudinally along the containment layer (35) and the auxiliary containment layer (36); optionally wherein steps (b) and (d) occur during said steps (a) and (c) to progressively form a laminar body (C) of predetermined length;
wherein the containment layer (35) is configured to allow the liquid polymerizable resin to pass through while preventing the recycled material (37) from passing through, optionally wherein the containment layer (35) is a porous material or a material provided with through openings including one or more of a woven fabric, a nonwoven fabric, a plastic grid film, a metal grid film, a plastic mesh or a metal mesh; and
wherein the auxiliary containment layer (36) is configured to allow the liquid polymerizable resin to pass through while preventing the recycled material (37) from passing through, optionally wherein the auxiliary containment layer (36) is a porous material or a material provided with through openings including one or more of a woven fabric, a nonwoven fabric, a plastic grid film, a metal grid film, a plastic mesh or a metal mesh.

12. Pole, optionally obtained by the process set forth in any one of the preceding claims, wherein the pole is made of reinforced polymeric resin and presents an elongated hollow body (P) of tubular conformation, said elongated hollow body (P) having along at least a part of its longitudinal development, optionally along its entire longitudinal development, cross-section comprising:
- new reinforcement fibers (F; F1, F2) embedded in new polymeric matrix,
- a laminar body (C);
wherein at least the new reinforcement fibers (F; F1, F2) are arranged radially inward and/or radially outward with respect to the laminar body (C);
wherein the laminar body (C) includes at least partially recycled material (37), said laminar body (C) having:
- a containment layer (35) and
- recycled material (37) placed on a side of the containment layer (35), such recycled material (37) including recycled fibers and recycled polymer particles;
and wherein also the laminar body (C) incorporates new polymeric matrix.

13. Pole according to the preceding claim, wherein the new reinforcement fibers (F; F1, F2) extend along a preponderant part or the entire elongated hollow body (P); and
wherein the new reinforcement fibers are in the form of one between:
- unidirectional bundles of fibers oriented along a longitudinal axis of predominant development of the elongated hollow body (P),
- fiber mats in which part of the fibers are oriented along the longitudinal axis of predominant development of the elongated hollow body (P) and part of the fibers are oriented transverse to said longitudinal axis of predominant development of the elongated hollow body (P),
- nonwoven fabrics of fibers in which part of the fibers are oriented along the longitudinal axis of predominant development of the elongated hollow body (P) and part of the fibers are oriented transverse to said longitudinal axis of predominant development of the elongated hollow body (P); or
- fabrics of fibers in which part of the fibers are oriented along the longitudinal axis of predominant development of the elongated hollow body (P) and part of the fibers are oriented transverse to said longitudinal axis of predominant development of the elongated hollow body (P);
optionally wherein the new reinforcement fibers (F; F1, F2) are glass fibers, carbon fibers, boron fibers, basalt fibers, aramid fibers, natural fibers or combinations thereof;
even more optionally wherein the recycled material (37) of the laminar body (C) is recycled material obtained by crushing composite material and is bond to the containment layer (35) by one or more of:
- glueing zones between the recycled material (37) and the retaining layer,
- welding zones a between the recycled material (37) and the containment layer (35).

14. Pole according to any one of claims 12-13, wherein:
- the laminar body (C) includes an auxiliary containment layer (36) coupled to the containment layer (35) such that the recycled material (37) is interposed between the containment layer (35) and the auxiliary containment layer (36);
- the recycled material (37) in the laminar body (C) has constant thickness and the laminar body (C) includes one or more connecting lines between the containment layer (35) and the auxiliary containment layer (36), optionally the connecting lines comprising one or more of glueing lines, heat-sealing lines, or stitching lines, arranged at least longitudinally along the containment layer (35) and the auxiliary containment layer (36);
- the new polymeric matrix in which the new reinforcement fibers (F; F1, F2) are embedded and the new polymeric matrix embedded by the laminar body (C) are derived from solidification of the same liquid resin;
- the new polymeric matrix present in the laminar body (C) fits into the gaps present in the recycled material (37) and the porosity or openings of the containment layer (35) creating a compact containment body; wherein the new polymeric matrix present in the laminar body (C) fits into the gaps present in the recycled material (37) and the porosity or openings of the containment layer (35) and the auxiliary containment layer (36) creating a compact containment body;
- the containment layer (35) is configured to allow the liquid polymerizable resin intended to form the new polymeric matrix present in the laminar body (C) to pass through, while preventing the recycled material (37) from passing through; wherein the containment layer (35) is made of a porous material or a material provided with through openings, optionally a woven fabric, nonwoven fabric, plastic grid film, metal grid film, plastic mesh or metal mesh;
- the auxiliary containment layer (36) is configured to allow the liquid polymerizable resin intended to form the new polymeric matrix present in the laminar body (C) to pass through, while preventing the recycled material (37) from passing through; wherein the auxiliary containment layer (36) is made of a porous material or a material provided with through openings, optionally a woven fabric, nonwoven fabric, plastic grid film, metal grid film, plastic mesh or metal mesh.

15. Pole according to any one of claims 12-14, wherein said new reinforcement fibers comprise first new reinforcement fibers (F1) and second new reinforcement fibers (F2) and wherein said elongated hollow body (P) cross-section comprises:
- a first annular zone (Z1), in which first new reinforcement fibers (F1) embedded in new polymeric matrix are arranged,
- a second annular zone (Z2), radially external to the first annular zone (Z1), in which second new reinforcement fibers (F2) embedded in new polymeric matrix are arranged, and
- a third annular zone (Z3) interposed between the first and second annular zones (Z1 and Z2) and comprising the laminar body (C);
wherein the new polymeric matrix present internally in the laminar body (C) is interconnected with the new polymeric matrix of the first annular zone (Z1) and with the new polymeric matrix of the second annular zone (Z2);
wherein:
- the first annular zone (Z1), lacking second new reinforcement fibers (F2), has an area measuring between 10 and 30% compared with the total cross-sectional area of the elongated hollow body (P),
- the second annular zone (Z2), lacking first new reinforcement fibers (F1), has an area measuring between 15 and 35% of the total cross-sectional area of the elongated hollow body (P),
- the third annular zone (Z3), optionally lacking new first and second reinforcement fibers, has an area of between 20 and 50% of the total cross-sectional area of the elongated hollow body (P);
optionally wherein:
- the first annular zone (Z1) has circular crown conformation,
- the second annular zone (Z2) has circular crown conformation and is concentric to the first annular zone (Z1),
- the third annular zone (Z3) has circular crown conformation and is concentric to the first annular zone (Z1) and the second annular zone (Z2);
even more optionally wherein the first annular zone (Z1) has area smaller than the second annular zone (Z2), which in turn has area smaller than the third annular zone (Z3);
or
wherein said cross-section of the elongated hollow body (P) comprises:
- a first annular zone (K1), in which new reinforcement fibers (F) embedded in polymeric matrix formed by solidification of the polymerizable liquid resin are arranged,
- a second annular zone (K2), radially external to the first annular zone (K1) comprising said laminar body (C) in which polymetric matrix also formed by solidification of the polymerizable liquid resin is present; the second annular zone (K2) optionally comprising a boundary zone with the first annular zone (K1) in which part of the laminar body (C) and part of the new reinforcement fibers (F) are both present;
wherein the polymeric matrix present in the second annular zone (K2) internally to the laminar body (C) is interconnected with the polymeric matrix of the first annular zone (K1);
optionally wherein the first annular zone (K1) has area measuring between 20 and 70% compared to the total cross-sectional area of the elongated hollow body (P), and the second annular zone (K2) has area measuring between 30 and 80% compared to the total cross-sectional area of the elongated hollow body (P); even more optionally wherein the first annular zone (K1) has area smaller than the second annular zone (K2) and wherein the first annular zone (K1) has circular crown conformation and the second annular zone (K2) has circular crown conformation and is concentric to the first annular zone;
or
wherein the cross section of the elongated hollow body (P) comprises:
- a first annular zone (W1) comprising said laminar body (C) in which polymetric matrix formed by solidification of the polymerizable liquid resin is present;
- a second annular zone (W2), radially outward from the first annular zone (W1), in which new reinforcement fibers (F) embedded in polymeric matrix formed by solidification of the polymerizable liquid resin are present, optionally wherein the first annular zone (W1) includes a boundary zone with the second annular zone (W2) in which part of the laminar body (C) and part of the new reinforcement fibers (F) are both present;
wherein the polymeric matrix present in the first annular zone (W1) inside the laminar body (C) is interconnected with the polymeric matrix of the second annular zone (W2);
optionally wherein the first annular zone(W1) has area measuring between 30 and 80% compared to the total cross-sectional area of the elongated hollow body (P), while the second annular zone (W2) has area measuring between 20 and 70% compared to the total cross-sectional area of the elongated hollow body (P); even more optionally wherein the first annular zone (W1) has area greater than that of the second annular zone (W2) and wherein the first annular zone (W1) has circular crown conformation, and the second annular zone (W2) has circular crown conformation and is concentric to the first annular zone (W1).

## Patentansprüche

1. Verfahren zur Herstellung eines länglichen Hohlkörpers, optional eines konischen Mastes, aus Kompositmaterial, wobei das Verfahren die folgenden Schritte umfasst:
- Anordnen neuer Verstärkungsfasern (F; F1, F2) und eines Laminarkörpers (C) innerhalb eines Längshohlraums einer länglichen Form (2), sodass der Laminarkörper (C) innerhalb des Längshohlraums der länglichen Form (2) benachbart zu den neuen Verstärkungsfasern (F; F1, F2) platziert ist, welche radial innen und/oder radial außen vom Laminarkörper (C) angeordnet sind; wobei der Laminarkörper (C) aus zumindest teilweise recyceltem Material (37) hergestellt ist, wobei der Laminarkörper (C) umfasst:
∘ eine Rückhalteschicht (35) und
o recyceltes Material (37), insbesondere erhalten durch Zerkleinern von Kompositmaterial, wobei das recycelte Material (37) recycelte Fasern und recycelte Polymerpartikel umfasst, wobei das recycelte Material (37) an einer Seite der Rückhalteschicht (35) angeordnet ist;
- Einbringen von flüssigem polymerisierbarem Harz in die längliche Form (2);
- Platzieren der länglichen Form (2) in Rotation um eine Längsachse der vorherrschenden Erstreckung (4) der länglichen Form selbst, um eine Zentrifugalbewegung des flüssigen polymerisierbaren Harzes zu bewirken und die neuen Verstärkungsfasern (F; F1, F2) sowie den Laminarkörper (C) mit dem flüssigen polymerisierbaren Harz zu imprägnieren;
- Verfestigen des flüssigen polymerisierbaren Harzes durch Bildung eines länglichen Hohlkörpers (P) in dem festen Zustand; und
- Entnehmen des länglichen Hohlkörpers (P) im festen Zustand aus der länglichen Form (2).

2. Verfahren nach Anspruch 1, wobei vor dem Schritt des Anordnens der neuen Verstärkungsfasern (F; F1, F2) und des Laminarkörpers (C) innerhalb des Längshohlraums der länglichen Form (2) die folgenden weiteren Schritte außerhalb des Längshohlraums der länglichen Form (2) durchgeführt werden:
- Anfertigen einer oder mehrerer Schichten in den neuen Verstärkungsfasern (F; F1, F2), wobei optional jede der Schichten eine jeweilige Breite und eine jeweilige Länge aufweist, welche sich von denen der anderen Schichten unterscheiden;
- Überlagern der einen oder mehreren Schichten und des Laminarkörpers (C), um eine Mehrfachschicht (M) zu bilden;
- Aufwickeln der Mehrfachschicht (M) auf einen Spuler (30);
und wobei der Schritt des Anordnens der neuen Verstärkungsfasern (F; F1, F2) und des Laminarkörpers (C) innerhalb des Längshohlraums der länglichen Form (2) umfasst:
- Einführen des Spulers (30), welcher die auf demselben Spuler aufgewickelte Mehrfachschicht (M) trägt, in die längliche Form (2), wobei das Einführen durch mindestens eine Endöffnung der länglichen Form (2) erfolgt;
- Herausziehen des Spulers (30) aus der Mehrfachschicht (M) und Extrahieren des Spulers (30) aus der länglichen Form (2);
- während oder nach dem Extrahieren des Spulers (30) aus der länglichen Form (2), Platzieren der Form (2) in Rotation, sodass die Mehrfachschicht (M) abgewickelt und fortschreitend an einer Innenfläche der länglichen Form (2) abgelegt wird.

3. Verfahren nach einem der vorhergehenden Ansprüche, wobei während des Schritts des Einbringens des flüssigen polymerisierbaren Harzes die längliche Form (2) um die Längsachse der vorherrschenden Erstreckung (4) mit einer vorbestimmten Winkelgeschwindigkeit in Rotation platziert wird, und
wobei das Einbringen von flüssigem polymerisierbarem Harz in die längliche Form (2) ein Zuführen des flüssigen polymerisierbaren Harzes zu einer oder mehreren Einspritzdüsen (15) bei einem Druck oberhalb des Atmosphärendrucks umfasst, wobei die eine oder mehreren Einspritzdüsen (15) innerhalb des Längshohlraums betrieben werden,
optional wobei:
- das flüssige polymerisierbare Harz vom vernetzbaren Typ durch Belichtung ist, und wobei das Verfahren ein Belichten des Längshohlraums innerhalb der länglichen Form (2) bereitstellt, um die Verfestigung durch Vernetzung des flüssigen polymerisierbaren Harzes zu fördern.

4. Verfahren nach einem der vorhergehenden Ansprüche, wobei nach dem Schritt des Anordnens der neuen Verstärkungsfasern (F) und des Laminarkörpers (C) innerhalb des Längshohlraums der länglichen Form (2) die neuen Verstärkungsfasern (F) und der Laminarkörper (C) so positioniert werden, dass beim radialen Fortschreiten von der Längsachse der vorherrschenden Erstreckung (4) zu einer/der Innenfläche der länglichen Form (2) Folgendes der Reihe nach angetroffen wird:
- zunächst werden eine oder mehrere Schichten, welche ausschließlich aus neuen Verstärkungsfasern (F) bestehen, angetroffen,
- dann werden eine oder mehrere Schichten, welche durch den Laminarkörper (C) gebildet werden, optional durchsetzt mit einer oder mehreren Schichten neuer Verstärkungsfasern (F), angetroffen, und
- dann werden eine oder mehrere Schichten, welche ausschließlich durch den Laminarkörper (C) gebildet werden, angetroffen;
oder
wobei nach dem Schritt des Anordnens der neuen Verstärkungsfasern (F) und des Laminarkörpers (C) innerhalb des Längshohlraums der länglichen Form (2) die neuen Verstärkungsfasern (F) und der Laminarkörper (C) so positioniert werden, dass beim radialen Fortschreiten von der Längsachse der vorherrschenden Erstreckung (4) zu einer/der Innenfläche der länglichen Form (2) Folgendes der Reihe nach angetroffen wird:
- zunächst werden eine oder mehrere Schichten, welche ausschließlich durch den Laminarkörper (C) gebildet werden, angetroffen,
- dann werden eine oder mehrere Schichten, welche durch den Laminarkörper (C) gebildet werden, optional durchsetzt mit einer oder mehreren Schichten neuer Verstärkungsfasern (F), angetroffen, und
- dann werden eine oder mehrere Schichten, welche ausschließlich aus neuen Verstärkungsfasern (F) bestehen, angetroffen.

5. Verfahren nach einem der vorhergehenden Ansprüche 1 bis 3, wobei die neuen Verstärkungsfasern erste neue Verstärkungsfasern (F1) und zweite neue Verstärkungsfasern (F2) umfassen; und
wobei nach dem Schritt des Anordnens der neuen Verstärkungsfasern und des Laminarkörpers (C) innerhalb des Längshohlraums der länglichen Form (2) der Laminarkörper (C) innerhalb des Längshohlraums der länglichen Form (2) in Zwischenschicht zwischen zumindest einem Teil der ersten neuen Verstärkungsfasern (F1), welche radial innen vom Laminarkörper (C) angeordnet sind, und zumindest einem Teil der zweiten neuen Verstärkungsfasern (F2), welche radial außen vom Laminarkörper (C) angeordnet sind, platziert wird;
optional wobei nach dem Schritt des Anordnens der neuen Verstärkungsfasern und des Laminarkörpers (C) innerhalb des Längshohlraums der länglichen Form (2) die neuen Verstärkungsfasern und der Laminarkörper (C) so positioniert werden, dass beim radialen Fortschreiten von der Längsachse der vorherrschenden Erstreckung (4) zu einer/der Innenfläche der länglichen Form (2) zunächst eine oder mehrere Schichten, welche ausschließlich aus ersten neuen Verstärkungsfasern (F1) bestehen, angetroffen werden, dann eine oder mehrere Schichten, welche durch den Laminarkörper (C) gebildet werden, optional durchsetzt mit einer oder mehreren Schichten erster neuer Verstärkungsfasern (F1), dann eine oder mehrere Schichten zweiter neuer Verstärkungsfasern (F2), optional durchsetzt mit einer oder mehreren Schichten, welche durch den Laminarkörper (C) gebildet werden, und schließlich ausschließlich eine oder mehrere Schichten, welche nur aus zweiten neuen Verstärkungsfasern (F2) bestehen.

6. Verfahren nach Anspruch 5, wenn abhängig von Anspruch 2, wobei vor dem Schritt des Anordnens der neuen Verstärkungsfasern und des Laminarkörpers (C) innerhalb des Längshohlraums der länglichen Form (2) die außerhalb des Längshohlraums der länglichen Form (2) durchgeführten Schritte wie folgt sind:
- Anfertigen einer oder mehrerer Schichten in den neuen Verstärkungsfasern (F; F1, F2) umfasst ein Anfertigen einer oder mehrerer erster Schichten in den ersten neuen Verstärkungsfasern (F1), optional wobei jede der ersten Schichten eine jeweilige Breite und eine jeweilige Länge aufweist, welche sich von denen der anderen ersten Schichten unterscheiden, und ein Anfertigen einer oder mehrerer zweiter Schichten in den zweiten neuen Verstärkungsfasern, optional wobei jede der zweiten Schichten eine jeweilige Breite und eine jeweilige Länge aufweist, welche sich von denen der anderen zweiten Schichten unterscheiden,
- Überlagern der einen oder mehreren Schichten und des Laminarkörpers (C), um eine Mehrfachschicht (M) zu bilden, umfasst ein Überlagern des Laminarkörpers (C) und der einen oder mehreren zweiten Schichten auf die einen oder mehreren ersten Schichten, um die Mehrfachschicht (M) zu bilden, in welcher, beim Fortschreiten entlang einer Dicke der Mehrfachschicht (M), der Laminarkörper (C) zwischen den einen oder mehreren ersten Schichten erster neuer Verstärkungsfasern (F1) und den einen oder mehreren zweiten Schichten zweiter neuer Verstärkungsfasern (F2) eingeschoben ist,
wobei vor dem Aufwickelschritt die einen oder mehreren ersten Schichten, die einen oder mehreren zweiten Schichten und der Laminarkörper (C) flach und zumindest teilweise miteinander überlappend angeordnet sind.

7. Verfahren nach einem der vorhergehenden Ansprüche, wobei nach dem Schritt des Einbringens des flüssigen polymerisierbaren Harzes in die längliche Form (2) und Rotierens der länglichen Form (2) das flüssige polymerisierbare Harz sich in einer zentrifugalen Richtung bewegt und die Mehrfachschicht wie folgt imprägniert:
- im Fall der ersten Alternative von Anspruch 4 durchdringt und imprägniert das flüssige polymerisierbare Harz nacheinander zumindest einen Abschnitt der neuen Verstärkungsfasern (F), dann einen Abschnitt des Laminarkörpers (C) und etwaige weitere zusätzliche neue Verstärkungsfasern (F), dann einen weiteren Abschnitt des Laminarkörpers (C); oder
- im Fall der zweiten Alternative von Anspruch 4 durchdringt und imprägniert das flüssige polymerisierbare Harz nacheinander zumindest einen Teil des Laminarkörpers (C), dann einen jeden weiteren Teil des Laminarkörpers (C) und optional einen ersten Abschnitt neuer Verstärkungsfasern (F) und dann den verbleibenden Abschnitt der neuen Verstärkungsfasern (F); oder
- im Fall von Anspruch 5 oder 6 durchdringt und imprägniert das flüssige polymerisierbare Harz nacheinander zumindest einen Abschnitt erster neuer Verstärkungsfasern (F1), dann einen Abschnitt des Laminarkörpers (C) und etwaige weitere zusätzliche erste neue Verstärkungsfasern (F1), dann einen weiteren Abschnitt des Laminarkörpers (C) und optional einen ersten Abschnitt zweiter neuer Verstärkungsfasern (F2) und dann einen verbleibenden Abschnitt zweiter neuer Verstärkungsfasern (F2).

8. Verfahren nach einem der vorhergehenden Ansprüche wenn mit Anspruch 5 oder 6 kombiniert, wobei der aus der länglichen Form (2) extrahierte längliche Hohlkörper (P) eine rohrförmige Gestalt mit ringförmigem Querschnitt aufzeigt, wobei der längliche Hohlkörper (P) entlang eines Teils seiner Längserstreckung, optional entlang seiner gesamten Längserstreckung, einen Querschnitt aufweist, umfassend:
- eine erste ringförmige Zone (Z1), in welcher die ersten neuen Verstärkungsfasern (F1) angeordnet sind und in eine Polymermatrix eingebettet sind, welche durch Verfestigung des flüssigen polymerisierbaren Harzes gebildet wird,
- eine zweite ringförmige Zone (Z2), welche radial außen zur ersten ringförmigen Zone (Z1) liegt, in welcher die zweiten neuen Verstärkungsfasern (F2) angeordnet sind und in eine Polymermatrix eingebettet sind, welche durch Verfestigung des flüssigen polymerisierbaren Harzes gebildet wird, und
- eine dritte ringförmige Zone, welche zwischen der ersten und der zweiten ringförmigen Zone (Z1 und Z2) eingeschoben ist und den Laminarkörper (C) umfasst, in welchem eine Polymermatrix vorhanden ist, welche durch Verfestigung des flüssigen polymerisierbaren Harzes gebildet wird; wobei die dritte ringförmige Zone optional eine Grenzzone mit der ersten ringförmigen Zone (Z1), in welcher Teile des Laminarkörpers (C) und erste neue Verstärkungsfasern (F1) vorhanden sind, und eine Grenzzone mit der zweiten ringförmigen Zone (Z2) umfasst, in welcher Teile des Laminarkörpers (C) und zweite neue Verstärkungsfasern (F2) vorhanden sind;
wobei nach dem Verfestigungsschritt des flüssigen polymerisierbaren Harzes welche im Inneren des Laminarkörpers (C) vorhandene Polymermatrix mit der Polymermatrix der ersten ringförmigen Zone (Z1) und mit der Polymermatrix der zweiten ringförmigen Zone (Z2) verbunden ist;
optional wobei:
- die erste ringförmige Zone (Z1), welche frei von zweiten neuen Verstärkungsfasern (F2) ist, eine Fläche aufweist, welche zwischen 10 und 30 % im Vergleich mit der gesamten Querschnittsfläche des länglichen Hohlkörpers (P) beträgt,
- die zweite ringförmige Zone (Z2), welcher erste neue Verstärkungsfasern (F1) fehlen, eine Fläche aufweist, welche zwischen 15 und 35 % der gesamten Querschnittsfläche des länglichen Hohlkörpers (P) beträgt,
- die dritte ringförmige Zone, welche frei von neuen Verstärkungsfasern ist, eine Fläche aufweist, welche zwischen 20 und 50 % der gesamten Querschnittsfläche des länglichen Hohlkörpers (P) beträgt,
- die erste ringförmige Zone (Z1) Kreisringkonformation aufweist,
- die zweite ringförmige Zone (Z2) Kreisringkonformation aufweist und konzentrisch zur ersten ringförmigen Zone ist,
- die dritte ringförmige Zone Kreisringkonformation aufweist und konzentrisch zur ersten ringförmigen Zone und zur zweiten ringförmigen Zone (Z2) ist;
weiter optional wobei die erste ringförmige Zone (Z1) eine Fläche aufweist, welche kleiner ist als die der zweiten ringförmigen Zone (Z2), welche ihrerseits eine Fläche aufweist, welche kleiner ist als die der dritten ringförmigen Zone (Z3).

9. Verfahren nach einem der vorhergehenden Ansprüche, wenn mit Anspruch 4 kombiniert, wobei: in der ersten Alternative von Anspruch 4 der aus der länglichen Form (2) extrahierte längliche Hohlkörper (P) eine rohrförmige Gestalt mit ringförmigem Querschnitt aufzeigt, wobei der längliche Hohlkörper (P) entlang eines Teils seiner Längserstreckung, optional entlang seiner gesamten Längserstreckung, einen Querschnitt aufweist, umfassend:
- eine erste ringförmige Zone (K1), in welcher neue Verstärkungsfasern (F), welche in eine Polymermatrix eingebettet sind, welche durch Verfestigung des flüssigen polymerisierbaren Harzes gebildet wird, angeordnet sind,
- eine zweite ringförmige Zone (K2), welche radial außen zur ersten ringförmigen Zone (K1) liegt, umfassend den Laminarkörper (C), in welchem eine Polymermatrix ist, welche ebenfalls durch Verfestigung des flüssigen polymerisierbaren Harzes gebildet wird; wobei die zweite ringförmige Zone (K2) optional eine Grenzzone mit der ersten ringförmigen Zone (K1) umfasst, in welcher ein Teil des Laminarkörpers (C) und neue Verstärkungsfasern (F) beide vorhanden sind;
wobei nach der Verfestigung des flüssigen polymerisierbaren Harzes die in der zweiten ringförmigen Zone (K2) im Inneren des Laminarkörpers (C) vorhandene Polymermatrix mit der Polymermatrix der ersten ringförmigen Zone (K1) verbunden ist;
optional wobei die erste ringförmige Zone (K1) eine Fläche aufweist, welche zwischen 20 und 70 % im Vergleich zur gesamten Querschnittsfläche des länglichen Hohlkörpers (P) beträgt, und die zweite ringförmige Zone (K2) eine Fläche aufweist, welche zwischen 30 und 80 % im Vergleich zur gesamten Querschnittsfläche des länglichen Hohlkörpers (P) beträgt;
noch weiter optional wobei die erste ringförmige Zone (K1) eine kleinere Fläche aufweist als die zweite ringförmige Zone (K2) und wobei die erste ringförmige Zone (K1) Kreisringkonformation aufweist und die zweite ringförmige Zone (K2) Kreisringkonformation aufweist und konzentrisch zur ersten ringförmigen Zone (K1) ist;
oder
in der zweiten Alternative von Anspruch 4 der aus der länglichen Form (2) extrahierte längliche Hohlkörper (P) eine rohrförmige Gestalt mit ringförmigem Querschnitt aufzeigt, wobei der längliche Hohlkörper (P) entlang eines Teils seiner Längserstreckung, optional entlang seiner gesamten Längserstreckung, einen Querschnitt aufzeigt, umfassend:
- eine erste ringförmige Zone (W1), welche den Laminarkörper (C) umfasst, in welchem eine Polymermatrix vorhanden ist, welche durch Verfestigung des polymerisierbaren flüssigen Harzes gebildet wird;
- eine zweite ringförmige Zone (W2), welche radial außen zur ersten ringförmigen Zone (W1) liegt, in welcher neue Verstärkungsfasern (F), welche in eine Polymermatrix eingebettet sind, welche durch Verfestigung des flüssigen polymerisierbaren Harzes gebildet wird, vorhanden sind, optional wobei die erste ringförmige Zone (W1) auch eine Grenzzone mit der zweiten ringförmigen Zone (W2) umfasst, in welcher ein Teil des Laminarkörpers (C) und neue Verstärkungsfasern (P) beide vorhanden sind;
wobei nach der Verfestigung des flüssigen polymerisierbaren Harzes die in der ersten ringförmigen Zone (W1) im Inneren des Laminarkörpers (C) vorhandene Polymermatrix mit der Polymermatrix der zweiten ringförmigen Zone (W2) verbunden ist;
optional wobei die erste ringförmige Zone (W1) eine Fläche aufweist, welche zwischen 30 und 80 % im Vergleich zur gesamten Querschnittsfläche des länglichen Hohlkörpers (P) beträgt, während die zweite ringförmige Zone (W2) eine Fläche aufweist, welche zwischen 20 und 70 % im Vergleich zur gesamten Querschnittsfläche des länglichen Hohlkörpers (P) beträgt;
noch weiter optional wobei die erste ringförmige Zone (W1) eine Fläche aufweist, welche größer ist als die der zweiten ringförmigen Zone (W2), und wobei die erste ringförmige Zone (W1) Kreisringkonformation aufweist und die zweite ringförmige Zone (W2) Kreisringkonformation aufweist und konzentrisch zur ersten ringförmigen Zone (W1) ist.

10. Verfahren nach einem der vorhergehenden Ansprüche, wobei die neuen Verstärkungsfasern (F; F1, F2) so in der länglichen Form (2) platziert werden, dass sie sich über einen überwiegenden Abschnitt oder den gesamten Längshohlraum erstrecken;
wobei die neuen Verstärkungsfasern (F; F1, F2) in einer der folgenden Formen vorliegen:
- unidirektionale Faserbündel, welche entlang der Längsachse der prävalenten Erstreckung orientiert sind,
- Fasermatten, in welchen ein Teil der Fasern entlang der Längsachse der vorherrschenden Erstreckung (4) orientiert ist und ein Teil der Fasern quer zu der Längsachse der vorherrschenden Erstreckung (4) orientiert ist,
- Fasergewebe, in welchen ein Teil der Fasern entlang der Längsachse der vorherrschenden Erstreckung (4) orientiert ist und ein Teil der Fasern quer zu der Längsachse der vorherrschenden Erstreckung (4) orientiert ist,
- Faservliesstoffe, in welchen ein Teil der Fasern entlang der Längsachse der vorherrschenden Erstreckung (4) orientiert ist und ein Teil der Fasern quer zu der Längsachse der vorherrschenden Erstreckung (4) orientiert ist;
optional wobei die neuen Verstärkungsfasern (F; F1, F2) Glasfasern, Kohlenstofffasern, Borfasern, Basaltfasern, Aramidfasern, Naturfasern oder Kombinationen davon sind.

11. Verfahren nach einem der vorhergehenden Ansprüche, umfassend ein Anfertigen des Laminarkörpers (C), wobei das Anfertigen des Laminarkörpers (C) ein Zerkleinern, optional durch mechanisches Mahlen, eines oder mehrerer Komposit-Abfallprodukte umfasst, um das recycelte Material (37) zu erhalten, welches recycelte Fasern und recycelte Polymerpartikel umfasst;
wobei das Herstellen des Laminarkörpers (C) ferner ein Ablegen des recycelten Materials (37) an die Seite der Rückhalteschicht (35) umfasst, und optional Binden des recycelten Materials (37) an die Seite der Rückhalteschicht (35) durch eines oder mehrere aus:
- Aufbringen von Kleber auf das recycelte Material (37),
- Aufbringen von Kleber auf die Rückhalteschicht (35),
- Schmelzen zumindest eines Teils des recycelten Materials (37),
- Schmelzen zumindest eines Teils der Rückhalteschicht (35);
ferner wobei das Anfertigen des Laminarkörpers (C) ein Verbinden der Rückhalteschicht (35) mit einer Hilfs-Rückhalteschicht (36) umfasst, sodass das recycelte Material (37) zwischen der Rückhalteschicht und der Hilfs-Rückhalteschicht (36) eingeschoben ist;
wobei das Verbinden der Rückhalteschicht (35) mit der Hilfs-Rückhalteschicht (36) umfasst:
- Anordnen der Rückhalteschicht (35) und der Hilfs-Rückhalteschicht (36) in einer gegenseitig überlappenden Beziehung, und
- Koppeln der Rückhalteschicht (35) und der Hilfs-Rückhalteschicht (36) miteinander;
wobei während des Schritts des Verbindens der Hilfs-Rückhalteschicht (36) mit der Rückhalteschicht (35) das Verfahren die folgenden Schritte umfasst:
- (a) Bewegen der Rückhalteschicht (35);
- (b) Aufbringen des recycelten Materials (37) an die Seite der Rückhalteschicht (35) während die Rückhalteschicht (35) bewegt wird;
- (c) Bewegen der Hilfs-Rückhalteschicht (36) oberhalb der Rückhalteschicht (35) und des auf der Rückhalteschicht selbst abgelegten recycelten Materials (37);
wobei:
- Schritt (a) des Bewegens der Rückhalteschicht (35) ein Abrollen der Rückhalteschicht (35) von einer jeweiligen Zuführrolle, ein Anordnen eines abgerollten Abschnitts der Rückhalteschicht (35) entlang einer Zuführebene umfasst,
- Schritt (b) des Aufbringens des recycelten Materials (37) ein Verteilen des recycelten Materials (37) über den abgerollten Abschnitt der Rückhalteschicht (35) umfasst,
- Schritt (c) des Bewegens der Hilfs-Rückhalteschicht (36) ein Abrollen der Hilfs-Rückhalteschicht (36) von einer jeweiligen Zuführrolle, ein Anordnen eines abgerollten Abschnitts der Hilfs-Rückhalteschicht (36) auf dem auf dem abgerollten Abschnitt der Rückhalteschicht (35) verteilten recycelten Materials (37) umfasst;
und wobei das Koppeln der Rückhalteschicht (35) und der Hilfs-Rückhalteschicht (36) miteinander umfasst:
- (d) Binden des abgerollten Abschnitts der Hilfs-Rückhalteschicht (36) mit dem abgerollten Abschnitt der Rückhalteschicht (35) entlang einer oder mehrerer Verbindungslinien, welche optional durch Klebelinien, Heißsiegellinien oder Nählinien gebildet werden, zumindest in Längsrichtung entlang der Rückhalteschicht (35) und der Hilfs-Rückhalteschicht (36) angeordnet sind; optional wobei Schritte (b) und (d) während der Schritte (a) und (c) erfolgen, um fortschreitend einen Laminarkörper (C) vorbestimmter Länge zu bilden;
wobei die Rückhalteschicht (35) dazu eingerichtet ist, dem flüssigen polymerisierbaren Harz zu erlauben hindurchzutreten, während das recycelte Material (37) am Hindurchtreten gehindert wird, wobei die Rückhalteschicht (35) optional ein poröses Material oder ein Material mit Durchgangsöffnungen ist, welches eines oder mehrere aus einem Gewebe, einem Vliesstoff, einer Kunststoffgitterfolie, einer Metallgitterfolie, einem Kunststoffnetz oder einem Metallnetz umfasst; und
wobei die Hilfs-Rückhalteschicht (36) dazu eingerichtet ist, dem flüssigen polymerisierbaren Harz zu erlauben hindurchzutreten, während das recycelte Material (37) am Hindurchtreten gehindert wird, optional wobei die Hilfs-Rückhalteschicht (36) ein poröses Material oder ein Material ist, welches mit Durchgangsöffnungen bereitgestellt ist, welches eines oder mehrere aus einem Gewebe, einem Vliesstoff, einer Kunststoffgitterfolie, einer Metallgitterfolie, einem Kunststoffnetz oder einem Metallnetz umfasst.

12. Mast, optional erhalten durch das Verfahren nach einem der vorhergehenden Ansprüche, wobei der Mast aus verstärkter Polymerharzmatrix hergestellt ist und einen länglichen Hohlkörper (P) rohrförmiger Gestalt aufzeigt, wobei der längliche Hohlkörper (P) entlang zumindest eines Teils seiner Längserstreckung, optional entlang seiner gesamten Längserstreckung, einen Querschnitt aufweist, umfassend:
- neue Verstärkungsfasern (F; F1, F2), welche in eine neue Polymermatrix eingebettet sind,
- einen Laminarkörper (C);
wobei zumindest die neuen Verstärkungsfasern (F; F1, F2) radial innen und/oder radial außen in Bezug auf den Laminarkörper (C) angeordnet sind;
wobei der Laminarkörper (C) zumindest teilweise recyceltes Material (37) umfasst, wobei der Laminarkörper (C) aufweist:
- eine Rückhalteschicht (35) und
- recyceltes Material (37), welches an einer Seite der Rückhalteschicht (35) platziert ist, sodass das recycelte Material (37) recycelte Fasern und recycelte Polymerpartikel umfasst;
und wobei auch der Laminarkörper (C) neue Polymermatrix einschließt.

13. Mast nach dem vorhergehenden Anspruch, wobei die neuen Verstärkungsfasern (F; F1, F2) sich entlang eines überwiegenden Teils oder des gesamten länglichen Hohlkörpers (P) erstrecken; und
wobei die neuen Verstärkungsfasern in einer der folgenden Formen vorliegen:
- unidirektionale Faserbündel, welche entlang einer Längsachse der vorherrschenden Erstreckung des länglichen Hohlkörpers (P) orientiert sind,
- Fasermatten, in welchen ein Teil der Fasern entlang der Längsachse der vorherrschenden Erstreckung des länglichen Hohlkörpers (P) orientiert ist und ein Teil der Fasern quer zu der Längsachse der vorherrschenden Erstreckung des länglichen Hohlkörpers (P) orientiert ist,
- Faservliesstoffe, in welchen ein Teil der Fasern entlang der Längsachse der vorherrschenden Erstreckung des länglichen Hohlkörpers (P) orientiert ist und ein Teil der Fasern quer zu der Längsachse der vorherrschenden Erstreckung des länglichen Hohlkörpers (P) orientiert ist; oder
- Fasergewebe, in welchen ein Teil der Fasern entlang der Längsachse der vorherrschenden Erstreckung des länglichen Hohlkörpers (P) orientiert ist und ein Teil der Fasern quer zu der Längsachse der vorherrschenden Erstreckung des länglichen Hohlkörpers (P) orientiert ist;
optional wobei die neuen Verstärkungsfasern (F; F1, F2) Glasfasern, Kohlenstofffasern, Borfasern, Basaltfasern, Aramidfasern, Naturfasern oder Kombinationen davon sind;
noch weiter optional wobei das recycelte Material (37) des Laminarkörpers (C) durch Zerkleinern von Kompositmaterial erhaltenes recyceltes Material ist und an die Rückhalteschicht (35) durch eines oder mehrere der folgenden gebunden ist:
- Klebezonen zwischen dem recycelten Material (37) und der Retentionsschicht,
- Schweißzonen zwischen dem recycelten Material (37) und der Rückhalteschicht (35).

14. Mast nach einem der Ansprüche 12-13, wobei:
- der Laminarkörper (C) eine Hilfs-Rückhalteschicht (36) umfasst, welche mit der Rückhalteschicht (35) gekoppelt ist, sodass das recycelte Material (37) zwischen der Rückhalteschicht (35) und der Hilfs-Rückhalteschicht (36) eingeschoben ist;
- das recycelte Material (37) im Laminarkörper (C) eine konstante Dicke aufweist und der Laminarkörper (C) eine oder mehrere Verbindungslinien zwischen der Rückhalteschicht (35) und der Hilfs-Rückhalteschicht (36) umfasst, optional wobei die Verbindungslinien eine oder mehrere aus Klebelinien, Heißsiegellinien oder Nählinien umfassen, welche zumindest in Längsrichtung entlang der Rückhalteschicht (35) und der Hilfs-Rückhalteschicht (36) angeordnet sind;
- die neue Polymermatrix, in welche die neuen Verstärkungsfasern (F; F1, F2) eingebettet sind, und die neue Polymermatrix, welche vom Laminarkörper (C) eingebettet wird, aus einer Verfestigung desselben flüssigen Harzes stammen;
- die neue Polymermatrix, welche im Laminarkörper (C) vorhanden ist, in die im recycelten Material (37) vorhandenen Zwischenräume und die Porosität oder Öffnungen der Rückhalteschicht (35) eingreift und einen kompakten Rückhaltekörper bildet; wobei die neue Polymermatrix, welche im Laminarkörper (C) vorhanden ist, in die im recycelten Material (37) vorhandenen Zwischenräume und die Porosität oder Öffnungen der Rückhalteschicht (35) und der Hilfs-Rückhalteschicht (36) eingreift und einen kompakten Rückhaltekörper bildet;
- die Rückhalteschicht (35) dazu eingerichtet ist, dem flüssigen polymerisierbaren Harz, welches dazu bestimmt ist, die im Laminarkörper (C) vorhandene neue Polymermatrix zu bilden, zu erlauben hindurchzutreten, während das recycelte Material (37) am Hindurchtreten gehindert wird; wobei die Rückhalteschicht (35) aus einem porösen Material oder einem Material besteht, welches mit Durchgangsöffnungen bereitgestellt ist, optional einem Gewebe, Vliesstoff, einer Kunststoffgitterfolie, einer Metallgitterfolie, einem Kunststoffnetz oder einem Metallnetz;
- die Hilfs-Rückhalteschicht (36) dazu eingerichtet ist, dem flüssigen polymerisierbaren Harz, welches dazu bestimmt ist, die im Laminarkörper (C) vorhandene neue Polymermatrix zu bilden, zu erlauben hindurchzutreten, während das recycelte Material (37) am Hindurchtreten gehindert wird; wobei die Hilfs-Rückhalteschicht (36) aus einem porösen Material oder einem Material mit Durchgangsöffnungen besteht, optional einem Gewebe, Vliesstoff, einer Kunststoffgitterfolie, einer Metallgitterfolie, einem Kunststoffnetz oder einem Metallnetz.

15. Mast nach einem der Ansprüche 12-14, wobei die neuen Verstärkungsfasern erste neue Verstärkungsfasern (F1) und zweite neue Verstärkungsfasern (F2) umfassen und wobei der Querschnitt des länglichen Hohlkörpers (P) umfasst:
- eine erste ringförmige Zone (Z1), in welcher erste neue Verstärkungsfasern (F1), welche in eine neue Polymermatrix eingebettet sind, angeordnet sind,
- eine zweite ringförmige Zone (Z2), welche radial außen zur ersten ringförmigen Zone (Z1) liegt, in welcher zweite neue Verstärkungsfasern (F2), welche in eine neue Polymermatrix eingebettet sind, angeordnet sind, und
- eine dritte ringförmige Zone (Z3), welche zwischen der ersten und der zweiten ringförmigen Zone (Z1 und Z2) angeordnet ist und den Laminarkörper (C) umfasst;
wobei die im Inneren des Laminarkörpers (C) vorhandene neue Polymermatrix mit der neuen Polymermatrix der ersten ringförmigen Zone (Z1) und mit der neuen Polymermatrix der zweiten ringförmigen Zone (Z2) verbunden ist;
wobei:
- die erste ringförmige Zone (Z1), welcher zweite neue Verstärkungsfasern (F2) fehlen, eine Fläche aufweist, welche zwischen 10 und 30 % im Vergleich zur gesamten Querschnittsfläche des länglichen Hohlkörpers (P) beträgt,
- die zweite ringförmige Zone (Z2), welcher erste neue Verstärkungsfasern (F1) fehlen, eine Fläche aufweist, welche zwischen 15 und 35 % der gesamten Querschnittsfläche des länglichen Hohlkörpers (P) beträgt,
- die dritte ringförmige Zone (Z3), welcher optional erste und zweite neue Verstärkungsfasern fehlen, eine Fläche aufweist, welche zwischen 20 und 50 % der gesamten Querschnittsfläche des länglichen Hohlkörpers (P) beträgt;
optional wobei:
- die erste ringförmige Zone (Z1) Kreisringkonformation aufweist,
- die zweite ringförmige Zone (Z2) Kreisringkonformation aufweist und konzentrisch zur ersten ringförmigen Zone (Z1) ist,
- die dritte ringförmige Zone (Z3) Kreisringkonformation aufweist und konzentrisch zur ersten ringförmigen Zone (Z1) und zur zweiten ringförmigen Zone (Z2) ist;
noch weiter optional wobei die erste ringförmige Zone (Z1) eine Fläche aufweist, welche kleiner ist als die der zweiten ringförmigen Zone (Z2), welche ihrerseits eine Fläche aufweist, welche kleiner ist als die der dritten ringförmigen Zone (Z3);
oder wobei der Querschnitt des länglichen Hohlkörpers (P) umfasst:
- eine erste ringförmige Zone (K1), in welcher neue Verstärkungsfasern (F), welche in eine Polymermatrix eingebettet sind, welche durch Verfestigung des polymerisierbaren flüssigen Harzes gebildet wurde, angeordnet sind,
- eine zweite ringförmige Zone (K2), welche radial außen zur ersten ringförmigen Zone (K1) liegt und den Laminarkörper (C) umfasst, in welchem eine Polymermatrix vorhanden ist, welche ebenfalls durch Verfestigung des polymerisierbaren flüssigen Harzes gebildet wurde, wobei die zweite ringförmige Zone (K2) optional eine Grenzzone mit der ersten ringförmigen Zone (K1) umfasst, in welcher ein Teil des Laminarkörpers (C) und ein Teil der neuen Verstärkungsfasern (F) beide vorhanden sind;
wobei die in der zweiten ringförmigen Zone (K2) im Inneren des Laminarkörpers (C) vorhandene Polymermatrix mit der Polymermatrix der ersten ringförmigen Zone (K1) verbunden ist; optional wobei die erste ringförmige Zone (K1) eine Fläche aufweist, welche zwischen 20 und 70 % im Vergleich zur gesamten Querschnittsfläche des länglichen Hohlkörpers (P) beträgt, und die zweite ringförmige Zone (K2) eine Fläche aufweist, welche zwischen 30 und 80 % im Vergleich zur gesamten Querschnittsfläche des länglichen Hohlkörpers (P) beträgt; noch weiter optional wobei die erste ringförmige Zone (K1) eine kleinere Fläche aufweist als die zweite ringförmige Zone (K2) und wobei die erste ringförmige Zone (K1) Kreisringkonformation aufweist und die zweite ringförmige Zone (K2) Kreisringkonformation aufweist und konzentrisch zur ersten ringförmigen Zone ist;
oder
wobei der Querschnitt des länglichen Hohlkörpers (P) umfasst:
- eine erste ringförmige Zone (W1), welche den Laminarkörper (C) umfasst, in welchem eine Polymermatrix vorhanden ist, welche durch Verfestigung des polymerisierbaren flüssigen Harzes gebildet wurde;
- eine zweite ringförmige Zone (W2), welche radial außen zur ersten ringförmigen Zone (W1) liegt, in welcher neue Verstärkungsfasern (F), welche in eine Polymermatrix eingebettet sind, welche durch Verfestigung des polymerisierbaren flüssigen Harzes gebildet wurde, vorhanden sind, optional wobei die erste ringförmige Zone (W1) eine Grenzzone mit der zweiten ringförmigen Zone (W2) umfasst, in welcher ein Teil des Laminarkörpers (C) und ein Teil der neuen Verstärkungsfasern (F) beide vorhanden sind;
wobei die in der ersten ringförmigen Zone (W1) im Inneren des Laminarkörpers (C) vorhandene Polymermatrix mit der Polymermatrix der zweiten ringförmigen Zone (W2) verbunden ist;
optional wobei die erste ringförmige Zone (W1) eine Fläche aufweist, welche zwischen 30 und 80 % im Vergleich zur gesamten Querschnittsfläche des länglichen Hohlkörpers (P) beträgt, während die zweite ringförmige Zone (W2) eine Fläche aufweist, welche zwischen 20 und 70 % im Vergleich zur gesamten Querschnittsfläche des länglichen Hohlkörpers (P) beträgt; noch weiter optional wobei die erste ringförmige Zone (W1) eine Fläche aufweist, welche größer ist als die der zweiten ringförmigen Zone (W2), und wobei die erste ringförmige Zone (W1) Kreisringkonformation aufweist und die zweite ringförmige Zone (W2) Kreisringkonformation aufweist und konzentrisch zur ersten ringförmigen Zone (W1) ist.

## Revendications

1. Procédé de fabrication d'un corps creux allongé, éventuellement d'un poteau effilé, à partir d'un matériau composite, ledit procédé comprenant les étapes suivantes consistant à :
- agencer de nouvelles fibres de renfort (F ; F1, F2) et un corps stratifié (C) au plan interne vis-à-vis d'une cavité longitudinale d'un moule allongé (2), de sorte que le corps stratifié (C) est placé au plan interne vis-à-vis de la cavité longitudinale du moule allongé (2) de sorte que le corps stratifié (C) est adjacent aux nouvelles fibres de renfort (F ; F1, F2), qui sont agencées radialement vers l'intérieur et/ou radialement vers l'extérieur depuis le corps stratifié (C) ; dans lequel le corps stratifié (C) est constitué au moins partiellement de matériau recyclé (37), ledit corps stratifié (C) incluant :
∘ une couche de confinement (35) et
∘ un matériau recyclé (37), en particulier obtenu par concassage de matériau composite, le matériau recyclé (37) incluant des fibres recyclées et des particules polymères recyclées, ledit matériau recyclé (37) étant agencé sur un côté de la couche de confinement (35) ;
- introduire de la résine polymérisable liquide dans ledit moule allongé (2) ;
- placer le moule allongé (2) en rotation autour d'un axe longitudinal de développement prédominant (4) du moule allongé lui-même pour fournir un mouvement centrifuge de la résine polymérisable liquide et imprégner avec ladite résine polymérisable liquide lesdites nouvelles fibres de renfort (F ; F1, F2) et ledit corps stratifié (C) ;
- solidifier ladite résine polymérisable liquide en formant un corps creux allongé (P) à l'état solide ; et à
- extraire ledit corps creux allongé (P) à l'état solide du moule allongé (2).

2. Procédé selon la revendication 1, dans lequel avant l'étape d'agencement desdites nouvelles fibres de renfort (F ; F1, F2) et dudit corps stratifié (C) au plan interne vis-à-vis de la cavité longitudinale du moule allongé (2) les étapes supplémentaires suivantes sont exécutées au plan externe vis-à-vis de la cavité longitudinale du moule allongé (2) :
- préparer une ou plusieurs couches dans lesdites nouvelles fibres de renfort (F ; F1, F2), éventuellement dans lequel chacune desdites couches présente une largeur respective et une longueur respective différentes de celles des autres couches ;
- surimposer lesdites une ou plusieurs couches et ledit corps stratifié (C) pour former une multicouche (M) ;
- envelopper ladite multicouche (M) sur un dévidoir (30) ;
et dans lequel l'étape d'agencement desdites nouvelles fibres de renfort (F ; F1, F2) et dudit corps stratifié (C) au plan interne vis-à-vis de la cavité longitudinale du moule allongé (2) inclut les étapes consistant à :
- introduire dans ledit moule allongé (2) le dévidoir (30) supportant ladite multicouche (M) embobinée sur le même dévidoir, ladite introduction survenant à travers au moins une ouverture d'extrémité du moule allongé (2) ;
- tirer le dévidoir (30) hors de la multicouche (M) et extraire le dévidoir (30) du moule allongé (2) ;
- durant ou après l'extraction du dévidoir (30) hors du moule allongé (2), placer le moule (2) en rotation de sorte que la multicouche (M) est déroulée et progressivement déposée au niveau d'une surface interne du moule allongé (2).

3. Procédé selon l'une quelconque des revendications précédentes, dans lequel durant ladite étape d'introduction de la résine polymérisable liquide le moule allongé (2) est placé en rotation autour de l'axe longitudinal de développement prédominant (4) à une vitesse angulaire prédéterminée, et
dans lequel l'introduction de la résine polymérisable liquide dans ledit moule allongé (2) inclut l'alimentation de la résine polymérisable liquide au niveau d'une ou plusieurs buses d'injection (15) sous une pression supérieure à la pression atmosphérique, lesdites une ou plusieurs buses d'injection (15) fonctionnant au plan interne de la cavité longitudinale ;
éventuellement dans lequel :
- ladite résine polymérisable liquide est l'une du type réticulable par éclairage, et dans lequel le procédé fournit l'éclairage de la cavité longitudinale à l'intérieur du moule allongé (2) pour favoriser ladite solidification par réticulation de ladite résine polymérisable liquide.

4. Procédé selon l'une quelconque des revendications précédentes, dans lequel, suite à l'étape d'agencement desdites nouvelles fibres de renfort (F) et dudit corps stratifié (C) au plan interne vis-à-vis de la cavité longitudinale du moule allongé (2), les nouvelles fibres de renfort (F) et le corps stratifié (C) sont positionnés de sorte que, en progressant radialement depuis l'axe longitudinal de développement prédominant (4) vers une/ladite surface interne du moule allongé (2), les éléments suivants sont séquentiellement interceptés:
- une ou plusieurs couches d'uniquement de nouvelles fibres de renfort (F) sont interceptées en premier,
- ensuite une ou plusieurs couches formées par le corps stratifié (C) éventuellement intercalées avec une ou plusieurs couches des nouvelles fibres de renfort (F) sont interceptées, et
- ensuite une ou plusieurs couches formées uniquement par le corps stratifié (C) sont interceptées ; ou
dans lequel, suite à l'étape d'agencement desdites nouvelles fibres de renfort (F) et dudit corps stratifié (C) au plan interne vis-à-vis de la cavité longitudinale du moule allongé (2), les nouvelles fibres de renfort (F) et le corps stratifié (C) sont positionnés afin de, progresser radialement depuis l'axe longitudinal de développement prédominant (4) vers une/ladite surface interne du moule allongé (2), ce qui suit étant séquentiellement intercepté :
- une ou plusieurs premières couches formées uniquement par le corps stratifié (C) sont interceptées,
- ensuite une ou plusieurs couches formées par le corps stratifié (C) éventuellement intercalées avec une ou plusieurs couches des nouvelles fibres de renfort (F) sont interceptées, et
- ensuite une ou plusieurs couches d'uniquement de nouvelles fibres de renfort (F) sont interceptées.

5. Procédé selon l'une quelconque des revendications précédentes de 1 à 3, dans lequel lesdites nouvelles fibres de renfort incluent de premières nouvelles fibres de renfort (F1) et de secondes nouvelles fibres de renfort (F2) ; et
dans lequel, suite à l'étape d'agencement desdites nouvelles fibres de renfort et dudit corps stratifié (C) au plan interne vis-à-vis de la cavité longitudinale du moule allongé (2), le corps stratifié (C) est placé au plan interne vis-à-vis de la cavité longitudinale du moule allongé (2) en interposition entre au moins une portion des premières nouvelles fibres de renfort (F1), agencées radialement vers l'intérieur depuis le corps stratifié (C), et au moins une portion des secondes nouvelles fibres de renfort (F2), agencées radialement vers l'extérieur depuis le corps stratifié (C) ;
éventuellement dans lequel, suite à l'étape d'agencement desdites nouvelles fibres de renfort et dudit corps stratifié (C) au plan interne vis-à-vis de la cavité longitudinale du moule allongé (2) les nouvelles fibres de renfort et le corps stratifié (C) sont positionnés de sorte que, en progressant radialement depuis l'axe longitudinal de développement prédominant (4) vers une/ladite surface interne du moule allongé (2), les éléments suivants sont séquentiellement interceptés: une ou plusieurs premières couches d'uniquement de premières nouvelles fibres de renfort (F1) sont interceptées, ensuite une ou plusieurs couches formées par le corps stratifié (C) éventuellement intercalées avec une ou plusieurs couches de premières nouvelles fibres de renfort (F1), ensuite une ou plusieurs couches de secondes nouvelles fibres de renfort (F2) éventuellement intercalées avec une ou plusieurs couches formées par le corps stratifié (C), et enfin exclusivement une ou plusieurs couches d'uniquement de secondes nouvelles fibres de renfort (F2).

6. Procédé selon la revendication 5, lorsqu'elle dépend de la revendication 2, dans lequel, avant l'étape d'agencement desdites nouvelles fibres de renfort et dudit corps stratifié (C) au plan interne vis-à-vis de la cavité longitudinale du moule allongé (2), lesdites étapes exécutées au plan externe vis-à-vis de la cavité longitudinale du moule allongé (2) consistent en ce qui suit :
- préparer une ou plusieurs couches dans lesdites nouvelles fibres de renfort (F ; F1, F2) incluant le fait de préparer une ou plusieurs premières couches dans lesdites premières nouvelles fibres de renfort (F1), éventuellement dans lequel chacune desdites premières couches présente une largeur respective et une longueur respective différentes de celles des autres premières couches, et préparer une ou plusieurs secondes couches dans lesdites secondes nouvelles fibres de renfort, éventuellement dans lequel chacune desdites secondes couches présente une largeur respective et une longueur respective différentes de celles des autres secondes couches,
- surimposer lesdites une ou plusieurs couches et ledit corps stratifié (C) pour former une multicouche (M) incluant le fait de surimposer sur lesdites une ou plusieurs premières couches ledit corps stratifié (C) et lesdites une ou plusieurs secondes couches pour former la multicouche (M) dans laquelle, en progressant le long d'une épaisseur de la multicouche (M), le corps stratifié (C) est interposé entre les une ou plusieurs premières couches des premières nouvelles fibres de renfort (F1) et les une ou plusieurs secondes couches des secondes nouvelles fibres de renfort (F2),
dans lequel avant ladite étape d'enveloppement les une ou plusieurs premières couches, les une ou plusieurs secondes couches, et le corps stratifié (C) sont agencés de manière plate et au moins partiellement chevauchante l'un par rapport à l'autre.

7. Procédé selon l'une quelconque des revendications précédentes dans lequel, suite à l'étape d'introduction de la résine polymérisable liquide dans le moule allongé (2) et de rotation du moule allongé (2), la résine polymérisable liquide se déplace dans une direction centrifuge et imprègne la multicouche comme suit :
- dans le cas de la première alternative selon la revendication 4, la résine polymérisable liquide passe successivement à travers et imprègne au moins une portion des nouvelles fibres de renfort (F), ensuite une portion du corps stratifié (C) et de quelconques nouvelles fibres de renfort (F) additionnelles, ensuite une portion additionnelle du corps stratifié (C) ; ou
- dans le cas de la seconde alternative selon la revendication 4, la résine polymérisable liquide passe successivement à travers et imprègne au moins une partie du corps stratifié (C), puis une quelconque partie additionnelle du corps stratifié (C) et éventuellement une première portion de nouvelles fibres de renfort (F) et ensuite la portion restante des nouvelles fibres de renfort (F) ; ou
- dans le cas selon la revendication 5 ou 6, la résine polymérisable liquide passe successivement à travers et imprègne au moins une portion des premières nouvelles fibres de renfort (F1), ensuite une portion du corps stratifié (C) et de quelconques premières nouvelles fibres de renfort (F1) additionnelles, ensuite une portion additionnelle du corps stratifié (C) et éventuellement une première portion des secondes nouvelles fibres de renfort (F2) et ensuite une portion restante des secondes nouvelles fibres de renfort (F2).

8. Procédé selon l'une quelconque des revendications précédentes lorsque combinées à la revendication 5 ou 6, dans lequel le corps creux allongé (P) extrait du moule allongé (2) présente une conformation tubulaire avec une section transversale annulaire, ledit corps creux allongé (P) présentant le long d'une partie de son développement longitudinal, éventuellement le long de son développement longitudinal entier, une section transversale comprenant :
- une première zone annulaire (Z1), dans laquelle les premières nouvelles fibres de renfort (F1) sont agencées et sont enchâssées dans une matrice polymère formée par solidification de ladite résine polymérisable liquide,
- une seconde zone annulaire (Z2), radialement externe vis-à-vis de la première zone annulaire (Z1), dans laquelle les secondes nouvelles fibres de renfort (F2) sont agencées et sont enchâssées dans une matrice polymère formée par solidification de ladite résine polymérisable liquide, et
- une troisième zone annulaire interposée entre la première et la seconde zone annulaire (Z1 et Z2) et comprenant ledit corps stratifié (C) dans laquelle une matrice polymère formée par solidification de ladite résine polymérisable liquide est présente ; la troisième zone annulaire comprenant éventuellement une zone frontière avec la première zone annulaire (Z1), dans laquelle des parties du corps stratifié (C) et de premières nouvelles fibres de renfort (F1) sont présentes, et une zone frontière avec la seconde zone annulaire (Z2), dans laquelle des parties du corps stratifié (C) et de secondes nouvelles fibres de renfort (F2) sont présentes ;
dans lequel, suite à ladite étape de solidification de la résine polymérisable liquide, la matrice polymère présente au plan interne dans le corps stratifié (C) est interconnectée à la matrice polymère de la première zone annulaire (Z1) et à la matrice polymère de la seconde zone annulaire (Z2) ;
éventuellement dans lequel :
- la première zone annulaire (Z1), dépourvue de secondes nouvelles fibres de renfort (F2), présente une surface mesurant entre 10 et 30 % comparée à la surface transversale totale du corps creux allongé (P),
- la seconde zone annulaire (Z2), manquant de premières nouvelles fibres de renfort (F1), présente une surface mesurant entre 15 et 35 % de la surface transversale totale du corps creux allongé (P),
- la troisième zone annulaire, qui est dépourvue de nouvelles fibres de renfort, présente une surface mesurant entre 20 et 50 % de la surface transversale totale du corps creux allongé (P),
- la première zone annulaire (Z1) présente une conformation en couronne circulaire,
- la seconde zone annulaire (Z2) présente une conformation en couronne circulaire et est concentrique vis-à-vis de la première zone annulaire,
- la troisième zone annulaire présente une conformation en couronne circulaire et est concentrique vis-à-vis de la première zone annulaire et de la seconde zone annulaire (Z2) ;
plus facultativement dans lequel la première zone annulaire (Z1) présente une surface inférieure à la seconde zone annulaire (Z2), qui à son tour présente une surface inférieure à la troisième zone annulaire (Z3).

9. Procédé selon l'une quelconque des revendications précédentes, lorsque combinées à la revendication 4, dans lequel :
dans la première alternative selon la revendication 4, le corps creux allongé (P) extrait du moule allongé (2) présente une conformation tubulaire avec une section transversale annulaire, ledit corps creux allongé (P) présentant le long d'une partie de son développement longitudinal, éventuellement le long de son développement longitudinal entier, une section transversale comprenant :
- une première zone annulaire (K1), dans laquelle de nouvelles fibres de renfort (F) enchâssées dans une matrice polymère formée par solidification de la résine polymérisable liquide sont agencées,
- une seconde zone annulaire (K2), radialement externe vis-à-vis de la première zone annulaire (K1), comprenant ledit corps stratifié (C) dans laquelle il existe une matrice polymère également formée par solidification de la résine polymérisable liquide ; la seconde zone annulaire (K2) éventuellement comprenant une zone frontière avec la première zone annulaire (K1) dans laquelle une partie du corps stratifié (C) et de nouvelles fibres de renfort (F) sont à la fois présentes ;
dans lequel, suite à la solidification de la résine polymérisable liquide, la matrice polymère présente dans la seconde zone annulaire (K2) à l'intérieur du corps stratifié (C) est interconnectée à la matrice polymère de la première zone annulaire (K1) ;
éventuellement dans lequel la première zone annulaire (K1) présente une surface mesurant entre 20 et 70 % comparée à la surface transversale totale du corps creux allongé (P), et la seconde zone annulaire (K2) présente une surface mesurant entre 30 et 80 % comparée à la surface transversale totale du corps creux allongé (P) ;
même plus facultativement dans lequel la première zone annulaire (K1) présente une surface inférieure à la seconde zone annulaire (K2) et dans lequel la première zone annulaire (K1) présente une conformation en couronne circulaire et la seconde zone annulaire (K2) présente une conformation en couronne circulaire et est concentrique vis-à-vis de la première zone annulaire (K1) ; ou
dans la seconde alternative selon la revendication 4, le corps creux allongé (P) extrait du moule allongé (2) présente une conformation tubulaire avec une section transversale annulaire, ledit corps creux allongé (P) présente le long d'une partie de son développement longitudinal, éventuellement le long de son développement longitudinal entier, une section transversale comprenant :
- une première zone annulaire (W1) comprenant ledit corps stratifié (C) dans laquelle une matrice polymère formée par solidification de la résine polymérisable liquide est présente ;
- une seconde zone annulaire (W2), radialement externe vis-à-vis de la première zone annulaire (W1), dans laquelle de nouvelles fibres de renfort (F) enchâssées dans une matrice polymère formée par solidification de la résine polymérisable liquide sont présentes, éventuellement dans laquelle la première zone annulaire (W1) inclut également une zone frontière avec la seconde zone annulaire (W2) dans laquelle une partie du corps stratifié (C) et de nouvelles fibres de renfort (P) sont à la fois présentes ;
dans lequel, suite à la solidification de la résine polymérisable liquide, la matrice polymère présente dans la première zone annulaire (W1) à l'intérieur du corps stratifié (C) est interconnectée à la matrice polymère de la seconde zone annulaire (W2) ;
éventuellement dans lequel la première zone annulaire (W1) présente une surface mesurant entre 30 et 80 % comparée à la surface transversale totale du corps creux allongé (P), tandis que la seconde zone annulaire (W2) présente une surface mesurant entre 20 et 70 % comparée à la surface transversale totale du corps creux allongé (P) ;
même plus facultativement dans lequel la première zone annulaire (W1) présente une surface supérieure à celle de la seconde zone annulaire (W2) ; et dans lequel la première zone annulaire (W1) présente une conformation en couronne circulaire, et la seconde zone annulaire (W2) présente une conformation en couronne circulaire et est concentrique vis-à-vis de la première zone annulaire (W1).

10. Procédé selon l'une quelconque des revendications précédentes, dans lequel les nouvelles fibres de renfort (F ; F1, F2) sont placées dans le moule allongé (2) afin de s'étendre sur une portion prépondérante, ou sur l'intégralité, de la cavité longitudinale ;
dans lequel les nouvelles fibres de renfort (F ; F1, F2) se présentent sous la forme de l'un entre :
- des faisceaux unidirectionnels de fibres orientés le long de l'axe longitudinal de développement prévalent,
- des mats de fibres dans lesquels une partie des fibres sont orientées le long de l'axe longitudinal de développement prédominant (4) et une partie des fibres sont orientées transversalement audit axe longitudinal de développement prédominant (4),
- des textiles de fibre dans lesquels une partie des fibres sont orientées le long de l'axe longitudinal de développement prédominant (4) et une partie des fibres sont orientées transversalement audit axe longitudinal de développement prédominant (4),
- des textiles non-tissés de fibres dans lesquels une partie des fibres sont orientées le long de l'axe longitudinal de développement prédominant (4) et une partie des fibres sont orientées transversalement audit axe longitudinal de développement prédominant (4) ;
éventuellement dans lequel les nouvelles fibres de renfort (F ; F1, F2) sont des fibres de verre, des fibres de carbone, des fibres de bore, des fibres de basalte, des fibres d'aramide, des fibres d'origine naturelle ou des combinaisons de celles-ci.

11. Procédé selon l'une quelconque des revendications précédentes, comprenant une préparation du corps stratifié (C), dans lequel la préparation du corps stratifié (C) comprend le concassage, éventuellement par broyage mécanique, d'un ou plusieurs produits de déchets composites pour obtenir ledit matériau recyclé (37) comprenant des fibres recyclées et des particules polymères recyclées ;
dans lequel une préparation du corps stratifié (C) inclut en outre le dépôt du matériau recyclé (37) sur ledit côté de la couche de confinement (35), et éventuellement la liaison du matériau recyclé (37) audit côté de la couche de confinement (35) par l'une ou plusieurs parmi :
- l'application de colle au matériau recyclé (37),
- l'application de colle à la couche de confinement (35),
- la fusion d'au moins une partie du matériau recyclé (37),
- la fusion d'au moins une partie de la couche de confinement (35) ;
en outre dans lequel une préparation du corps stratifié (C) inclut une association de la couche de confinement (35) à une couche de confinement auxiliaire (36) de sorte que le matériau recyclé (37) est interposé entre la couche de confinement et la couche de confinement auxiliaire (36) ;
dans lequel une association de la couche de confinement (35) à la couche de confinement auxiliaire (36) inclut les étapes consistant à :
- agencer la couche de confinement (35) et la couche de confinement auxiliaire (36) en une relation mutuellement chevauchante, et
- accoupler la couche de confinement (35) et la couche de confinement auxiliaire (36) ensemble ;
dans lequel durant ladite étape d'association de la couche de confinement auxiliaire (36) à la couche de confinement (35) le procédé inclut les étapes suivantes consistant à :
- (a) déplacer la couche de confinement (35) ;
- (b) déposer le matériau recyclé (37) sur ledit côté de la couche de confinement (35) tout en déplaçant cette dernière ;
- (c) déplacer la couche de confinement auxiliaire (36) au-dessus de la couche de confinement (35) et le matériau recyclé (37) déposé sur la couche de confinement elle-même ;
dans lequel :
- une étape (a) de déplacement de la couche de confinement (35) implique le déroulage de la couche de confinement (35) depuis un rouleau d'alimentation respectif, un agencement d'une section déroulée de la couche de confinement (35) le long d'un plan d'alimentation,
- une étape (b) de dépôt du matériau recyclé (37) implique une distribution du matériau recyclé (37) sur ladite section déroulée de la couche de confinement (35),
- une étape (c) de déplacement de la couche de confinement auxiliaire (36) implique le déroulage de la couche de confinement auxiliaire (36) depuis un rouleau d'alimentation respectif, l'agencement d'une section déroulée de la couche de confinement auxiliaire (36) sur le dessus du matériau recyclé (37) réparti sur la section déroulée de la couche de confinement (35) ;
et dans lequel l'accouplement ensemble de la couche de confinement (35) et de la couche de confinement auxiliaire (36) inclut l'étape consistant à :
- (d) lier la section déroulée de la couche de confinement auxiliaire (36) à la section déroulée de la couche de confinement (35) le long d'une ou plusieurs lignes de jonction, éventuellement obtenues à l'aide de lignes de collage, de lignes de thermoscellage ou de lignes de couture, agencées au moins longitudinalement le long de la couche de confinement (35) et de la couche de confinement auxiliaire (36) ; éventuellement dans lequel des étapes (b) et (d) se produisent durant lesdites étapes (a) et (c) pour former progressivement un corps stratifié (C) de longueur prédéterminée ;
dans lequel la couche de confinement (35) est configurée pour permettre à la résine polymérisable liquide de passer à travers tout en empêchant le matériau recyclé (37) de passer à travers, éventuellement dans lequel la couche de confinement (35) est un matériau poreux ou un matériau pourvu d'ouvertures traversantes incluant l'un ou plusieurs parmi un textile tissé, un textile non-tissé, un film de grille en matière plastique, un film de grille métallique, un treillis en matière plastique ou un treillis métallique ; et
dans lequel la couche de confinement auxiliaire (36) est configurée pour permettre à la résine polymérisable liquide de passer à travers tout en empêchant le matériau recyclé (37) de passer à travers, éventuellement dans lequel la couche de confinement auxiliaire (36) est un matériau poreux ou un matériau pourvu d'ouvertures traversantes incluant l'un ou plusieurs parmi un textile tissé, un textile non-tissé, un film de grille en matière plastique, un film de grille métallique, un treillis en matière plastique ou un treillis métallique.

12. Poteau, éventuellement obtenu selon le procédé énoncé selon l'une quelconque des revendications précédentes, dans lequel le poteau est fabriqué à partir d'une résine polymère renforcée et présente un corps creux allongé (P) de conformation tubulaire, ledit corps creux allongé (P) ayant le long d'au moins une partie de son développement longitudinal, éventuellement le long de son développement longitudinal entier, une section transversale comprenant :
- de nouvelles fibres de renfort (F ; F1, F2) enchâssées dans une nouvelle matrice polymère,
- un corps stratifié (C) ;
dans lequel au moins les nouvelles fibres de renfort (F ; F1, F2) sont agencées radialement vers l'intérieur et/ou radialement vers l'extérieur par rapport au corps stratifié (C) ;
dans lequel le corps stratifié (C) inclut du matériau au moins partiellement recyclé (37), ledit corps stratifié (C) ayant :
- une couche de confinement (35) et
- du matériau recyclé (37) placé sur un côté de la couche de confinement (35), ledit matériau recyclé (37) incluant des fibres recyclées et des particules polymères recyclées ;
et dans lequel également le corps stratifié (C) incorpore une nouvelle matrice polymère.

13. Poteau selon la revendication précédente, dans lequel les nouvelles fibres de renfort (F ; F1, F2) s'étendent le long d'une partie prépondérante ou de l'intégralité du corps creux allongé (P) ; et
dans lequel les nouvelles fibres de renfort se présentent sous la forme de l'un entre :
- des faisceaux unidirectionnels de fibres orientés le long d'un axe longitudinal de développement prédominant du corps creux allongé (P),
- des mats de fibres dans lesquels une partie des fibres sont orientées le long de l'axe longitudinal de développement prédominant du corps creux allongé (P) et une partie des fibres sont orientées transversalement audit axe longitudinal de développement prédominant du corps creux allongé (P),
- des textiles non-tissés de fibres dans lesquels une partie des fibres sont orientées le long de l'axe longitudinal de développement prédominant du corps creux allongé (P) et une partie des fibres sont orientées transversalement audit axe longitudinal de développement prédominant du corps creux allongé (P) ; ou
- des textiles de fibres dans lesquels une partie des fibres sont orientées le long de l'axe longitudinal de développement prédominant du corps creux allongé (P) et une partie des fibres sont orientées transversalement audit axe longitudinal de développement prédominant du corps creux allongé (P) ;
éventuellement dans lequel les nouvelles fibres de renfort (F ; F1, F2) sont des fibres de verre, des fibres de carbone, des fibres de bore, des fibres de basalte, des fibres d'aramide, des fibres d'origine naturelle ou des combinaisons de celles-ci ;
même plus facultativement dans lequel le matériau recyclé (37) du corps stratifié (C) est du matériau recyclé obtenu par concassage de matériau composite et est lié à la couche de confinement (35) par une ou plusieurs de :
- zones de collage entre le matériau recyclé (37) et la couche de retenue,
- zones de soudure entre le matériau recyclé (37) et la couche de confinement (35).

14. Poteau selon l'une quelconque des revendications 12 à 13, dans lequel :
- le corps stratifié (C) inclut une couche de confinement auxiliaire (36) accouplée à la couche de confinement (35) de sorte que le matériau recyclé (37) est interposé entre la couche de confinement (35) et la couche de confinement auxiliaire (36) ;
- le matériau recyclé (37) dans le corps stratifié (C) présente une épaisseur constante et le corps stratifié (C) inclut une ou plusieurs lignes de raccordement entre la couche de confinement (35) et la couche de confinement auxiliaire (36), éventuellement les lignes de raccordement comprenant l'une ou plusieurs de lignes de collage, de lignes de thermoscellage, ou de lignes de couture, agencées au moins longitudinalement le long de la couche de confinement (35) et de la couche de confinement auxiliaire (36) ;
- la nouvelle matrice polymère dans laquelle les nouvelles fibres de renfort (F ; F1, F2) sont enchâssées et la nouvelle matrice polymère enchâssée par le corps stratifié (C) dérivent d'une solidification de la même résine liquide ;
- la nouvelle matrice polymère présente dans le corps stratifié (C) s'ajuste dans les espaces présents dans le matériau recyclé (37) et la porosité ou les ouvertures de la couche de confinement (35) créant un corps de confinement compact ; dans lequel la nouvelle matrice polymère présente dans le corps stratifié (C) s'ajuste dans les espaces présents dans le matériau recyclé (37) et la porosité ou les ouvertures de la couche de confinement (35) et la couche de confinement auxiliaire (36) créant un corps de confinement compact ;
- la couche de confinement (35) est configurée pour permettre à la résine polymérisable liquide prévue pour former la nouvelle matrice polymère présente dans le corps stratifié (C) de passer à travers, tout en empêchant le matériau recyclé (37) de passer à travers ; dans lequel la couche de confinement (35) est constituée d'un matériau poreux ou d'un matériau pourvu d'ouvertures traversantes, éventuellement d'un textile tissé, d'un textile non-tissé, d'un film de grille en matière plastique, d'un film de grille métallique, d'un treillis en matière plastique ou d'un treillis métallique ;
- la couche de confinement auxiliaire (36) est configurée pour permettre à la résine polymérisable liquide prévue pour former la nouvelle matrice polymère présente dans le corps stratifié (C) de passer à travers, tout en empêchant le matériau recyclé (37) de passer à travers ; dans lequel la couche de confinement auxiliaire (36) est constituée d'un matériau poreux ou d'un matériau pourvu d'ouvertures traversantes, éventuellement d'un textile tissé, d'un textile non-tissé, d'un film de grille en matière plastique, d'un film de grille métallique, d'un treillis en matière plastique ou d'un treillis métallique.

15. Poteau selon l'une quelconque des revendications 12 à 14, dans lequel lesdites nouvelles fibres de renfort comprennent de premières nouvelles fibres de renfort (F1) et de secondes nouvelles fibres de renfort (F2) et dans lequel ladite section transversale du corps creux allongé (P) comprend :
- une première zone annulaire (Z1), dans laquelle de premières nouvelles fibres de renfort (F1) enchâssées dans une nouvelle matrice polymère sont agencées,
- une seconde zone annulaire (Z2), radialement externe vis-à-vis de la première zone annulaire (Z1), dans laquelle de secondes nouvelles fibres de renfort (F2) enchâssées dans une nouvelle matrice polymère sont agencées, et
- une troisième zone annulaire (Z3) interposée entre la première et la seconde zone annulaire (Z1 et Z2) et comprenant le corps stratifié (C) ;
dans lequel la nouvelle matrice polymère présente au plan interne dans le corps stratifié (C) est interconnectée à la nouvelle matrice polymère de la première zone annulaire (Z1) et à la nouvelle matrice polymère de la seconde zone annulaire (Z2) ;
dans lequel :
- la première zone annulaire (Z1), manquant de secondes nouvelles fibres de renfort (F2), présente une surface mesurant entre 10 et 30 % comparée à la surface transversale totale du corps creux allongé (P),
- la seconde zone annulaire (Z2), manquant de premières nouvelles fibres de renfort (F1), présente une surface mesurant entre 15 et 35 % de la surface transversale totale du corps creux allongé (P),
- la troisième zone annulaire (Z3), manquant éventuellement de nouvelles premières et secondes fibres de renfort, présente une surface comprise entre 20 et 50 % de la surface transversale totale du corps creux allongé (P) ;
éventuellement dans lequel :
- la première zone annulaire (Z1) présente une conformation en couronne circulaire,
- la seconde zone annulaire (Z2) présente une conformation en couronne circulaire et est concentrique vis-à-vis de la première zone annulaire (Z1),
- la troisième zone annulaire (Z3) présente une conformation en couronne circulaire et est concentrique vis-à-vis de la première zone annulaire (Z1) et de la seconde zone annulaire (Z2) ;
même plus facultativement dans lequel la première zone annulaire (Z1) présente une surface inférieure à la seconde zone annulaire (Z2), qui à son tour présente une surface inférieure à la troisième zone annulaire (Z3) ; ou
dans lequel ladite section transversale du corps creux allongé (P) comprend :
- une première zone annulaire (K1), dans laquelle de nouvelles fibres de renfort (F) enchâssées dans une matrice polymère formée par solidification de la résine polymérisable liquide sont agencées,
- une seconde zone annulaire (K2), radialement externe vis-à-vis de la première zone annulaire (K1) comprenant ledit corps stratifié (C) dans lequel une matrice polymère également formée par solidification de la résine polymérisable liquide est présente ; la seconde zone annulaire (K2) éventuellement comprenant une zone frontière avec la première zone annulaire (K1) dans laquelle une partie du corps stratifié (C) et une partie des nouvelles fibres de renfort (F) sont à la fois présentes ;
dans lequel la matrice polymère présente dans la seconde zone annulaire (K2) au plan interne vis-à-vis du corps stratifié (C) est interconnectée à la matrice polymère de la première zone annulaire (K1) ;
éventuellement dans lequel la première zone annulaire (K1) présente une surface mesurant entre 20 et 70 % comparée à la surface transversale totale du corps creux allongé (P), et la seconde zone annulaire (K2) présente une surface mesurant entre 30 et 80 % comparée à la surface transversale totale du corps creux allongé (P) ; même plus facultativement dans lequel la première zone annulaire (K1) présente une surface inférieure à la seconde zone annulaire (K2) et dans lequel la première zone annulaire (K1) présente une conformation en couronne circulaire et la seconde zone annulaire (K2) présente une conformation en couronne circulaire et est concentrique vis-à-vis de la première zone annulaire ; ou
dans lequel la section transversale du corps creux allongé (P) comprend :
- une première zone annulaire (W1) comprenant ledit corps stratifié (C) dans lequel une matrice polymère formée par solidification de la résine polymérisable liquide est présente ;
- une seconde zone annulaire (W2), radialement externe vis-à-vis de la première zone annulaire (W1), dans laquelle de nouvelles fibres de renfort (F) enchâssées dans une matrice polymère formée par solidification de la résine polymérisable liquide sont présentes, éventuellement dans laquelle la première zone annulaire (W1) inclut une zone frontière avec la seconde zone annulaire (W2) dans laquelle une partie du corps stratifié (C) et une partie des nouvelles fibres de renfort (F) sont à la fois présentes ;
dans lequel la matrice polymère présente dans la première zone annulaire (W1) à l'intérieur du corps stratifié (C) est interconnectée à la matrice polymère de la seconde zone annulaire (W2) ;
éventuellement dans lequel la première zone annulaire (W1) présente une surface mesurant entre 30 et 80 % comparée à la surface transversale totale du corps creux allongé (P), tandis que la seconde zone annulaire (W2) présente une surface mesurant entre 20 et 70 % comparée à la surface transversale totale du corps creux allongé (P) ; même plus facultativement dans lequel la première zone annulaire (W1) présente une surface supérieure à celle de la seconde zone annulaire (W2) et dans lequel la première zone annulaire (W1) présente une conformation en couronne circulaire, et la seconde zone annulaire (W2) présente une conformation en couronne circulaire et est concentrique vis-à-vis de la première zone annulaire (W1).
